(19)

**Europäisches Patentamt**
**European Patent Office**
**Office européen des brevets**

(11) **EP 4 746 329 A1**

(12) **EUROPEAN PATENT APPLICATION**

(43) Date of publication:
20.05.2026 Bulletin 2026/21

(21) Application number: 24213059.9

(22) Date of filing: 14.11.2024

(51) International Patent Classification (IPC):
*H04L 5/00* (2006.01)

(52) Cooperative Patent Classification (CPC):
H04L 5/0051

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Nokia Technologies Oy**
**02610 Espoo (FI)**

(72) Inventors:
• **TIIROLA, Esa Tapani**
**90620 Oulu (FI)**

• **HOOLI, Kari Juhani**
**90620 Oulu (FI)**
• **KINNUNEN, Pasi Eino Tapio**
**90240 Oulu (FI)**
• **HUGL, Klaus**
**A-1070 Vienna (AT)**
• **KAIKKONEN, Jorma Johannes**
**90800 Oulu (FI)**
• **TERVO, Oskari**
**90630 Oulu (FI)**

(74) Representative: **Samson & Partner Patentanwälte mbB**
**Widenmayerstraße 6**
**80538 München (DE)**

(54) **SEQUENCE MAPPING OF DEMODULATION REFERENCE SIGNALS OF MULTIPLE CONTROL RESOURCE SETS**

(57) A method for sequence mapping of demodulation reference signals of multiple control resource sets of a serving cell is presented. The method is performed by a user equipment and comprises determining a common reference point for the multiple control resource sets, wherein the common reference point is a lowest subcarrier of a common control resource set, determining a demodulation reference signal sequence to resource elements mapping for the multiple control resource sets based on the common reference point, wherein the sequence mapping is determined in a cyclic manner between a lower limit point and an upper limit point, and receiving and decoding a physical downlink control channel based on the determined demodulation reference signal sequence to resource elements mapping. A user equipment configured accordingly is also presented as well as a related method for a base station, a base station, and a computer program product.

Determining a common reference point for multiple control resource sets — 61

Determining a demodulation reference signal sequence to resource elements mapping — 62

Receiving and decoding a physical downlink control channel in a control resource set — 63

**Fig. 6**

EP 4 746 329 A1

**Description**

THECHNICAL FIELD

The subject disclosure generally relates to wireless communication systems and, in particular, to sequence mapping of demodulation reference signals of multiple control resource sets.

BACKGROUND

Wireless communication systems, e.g., mobile communication systems, are under constant development. In earlier mobile communication systems, such as Long-Term Evolution (LTE) of the 3rd Generation Partnership Project (3GPP), user equipments (UEs) did not support bandwidth adaptation within a network carrier. This means, the network carrier provided by a base station (BS) was the same (from a frequency, e.g., bandwidth perspective) as the UE carrier and the component carrier.

When introducing the 5th generation (5G) of the 3GPP, a bandwidth part (BWP) concept was introduced. This enabled the UEs to only operate in a limited frequency bandwidth of a network carrier, which was targeted to improve power saving, supports different UE capabilities, allows multiple parallel radio resource control (RRC) configuration (e.g., for different numerologies etc.), and much more. However, it was observed that there is still room for further improvements. Therefore, in the developments for the 6th generation (6G) mobile communication concepts of the 3GPP and generally for future networks, the approach of BWPs may be further developed and UEs may be configured with multiple different and dynamic BWPs.

Different BWPs may overlap and may have different control resource sets (CORESETs) configured for the UE, which may, thus, also overlap. Moreover, a BWP may also have multiple control resource sets configured for the UE, which may overlap, too. Each CORESET may have its own demodulation reference signal (DMRS) sequence needed for receiver processing by the UE. For example, the UE may perform channel estimation needed for coherent detection based on DMRS. If multiple different CORESETs are configured for a UE, the complexity of processes to be performed by the UE may increase significantly, in particular, if the DMRS of each CORESETs are to be processed separately.

SUMMARY

According to a first aspect of the disclosure, a method for sequence mapping of demodulation reference signals of multiple control resource sets of a serving cell is presented. The method is performed by a user equipment and comprises determining a common reference point for the multiple control resource sets, wherein the common reference point is a lowest subcarrier of a common control resource set, determining a demodulation reference signal sequence to resource elements mapping for the multiple control resource sets based on the common reference point, wherein the sequence mapping is determined in a cyclic manner between a lower limit point and an upper limit point starting from the common reference point in direction of increasing subcarrier indexes and ending one subcarrier lower than the common reference point, and receiving and decoding a physical downlink control channel in a control resource set of the multiple control resource sets based on the determined demodulation reference signal sequence to resource elements mapping.

In some embodiments, the multiple control resource sets comprise the common control resource set for receiving a physical downlink control channel related to obtaining system information carrying cell access related information and at least one other control resource set for receiving other physical downlink control channels. In some embodiments, at least two of the multiple control resource sets are overlapping at least in part in time and frequency.

In some embodiments, the lower limit point and the upper limit point are indicated in the system information carrying cell access related information and/or in radio resource control signaling. In some embodiments, the lower limit point is the lowest subcarrier of a network carrier or the lowest subcarrier of a resource element grid common to the multiple control resource sets, wherein the upper limit point is the highest subcarrier of the actual carrier or another explicitly indicated point of a higher subcarrier than the highest subcarrier of the network carrier.

In some embodiments, the sequence mapping $a_{k,l}$ for demodulation reference signal sequence $r_l(m)$ and OFDM symbol 1 to resource elements (k, $l$), with $N_{sc}^{RB}$ being the number of subcarriers per resource block, and $\beta_{DMRS}^{PDCCH}$ being an amplitude scaling factor for the demodulation reference signal, is calculated as follows:

for the common control resource set:

$$a_{k,l} = \beta_{DMRS}^{PDCCH} \cdot r_l(3n + k')$$

$$k = (nN_{\text{sc}}^{\text{RB}} + 4k' + 1)$$

$$k' = 0,1,2$$

$$n = 0,1,\ldots$$

with a reference point for k being the common reference point; and

for the at least one other control resource set:

$$a_{k,l} = \beta_{DMRS}^{PDCCH} \cdot r_l(3n + k')$$

$$k = (nN_{\text{sc}}^{\text{RB}} + 4k' + 1 + E) \bmod F$$

$$k' = 0,1,2$$

$$n = 0,1,\ldots$$

with a reference point for k being the lower limit point, E being a shift in number of subcarriers between the lower limit point and the common reference point, and F being the cycle length in number of subcarriers.

According to a second aspect of the disclosure, a user equipment is presented. The user equipment is configured for sequence mapping of demodulation reference signals of multiple control resource sets of a serving cell and at least one processor, and at least one memory storing instructions that, when executed by the at least one processor, cause the user equipment at least to execute the method according to the methods described herein.

According to a third aspect of the disclosure, a method for sequence mapping of demodulation reference signals of multiple control resource sets of a serving cell is presented. The method is performed by a base station providing the service cell and comprises determining a common reference point for the multiple control resource sets, wherein the common reference point is a lowest subcarrier of a common control resource set, determining a demodulation reference signal sequence to resource elements mapping for the multiple control resource sets based on the common reference point, wherein the sequence mapping is determined in a cyclic manner between a lower limit point and an upper limit point starting from the common reference point in direction of increasing subcarrier indexes and ending one subcarrier lower than the common reference point, and transmitting a demodulation reference signal of the multiple control resource sets based on the determined demodulation reference signal sequence to resource elements mapping.

In some embodiments, the multiple control resource sets comprise the common control resource set for receiving a physical downlink control channel related to obtaining system information carrying cell access related information and at least one other control resource set for receiving other physical downlink control channels. In some embodiments, at least two of the multiple control resource sets are overlapping at least in part in time and frequency.

In some embodiments, the lower limit point and the upper limit point are indicated to user equipments in the system information carrying cell access related information and/or in radio resource control signaling. In some embodiments, the lower limit point is the lowest subcarrier of a network carrier or the lowest subcarrier of a resource element grid common to the multiple control resource sets, wherein the upper limit point is the highest subcarrier of the network carrier or another explicitly indicated point of a higher subcarrier than the highest subcarrier of the network carrier.

In some embodiments, the sequence mapping $a_{k,l}$ for demodulation reference signal sequence $r_l(m)$ and OFDM symbol 1 to resource elements $(k, l)$, with $N_{\text{sc}}^{\text{RB}}$ being the number of subcarriers per resource block, and $\beta_{\text{DMRS}}^{\text{PDCCH}}$ being an amplitude scaling factor for the demodulation reference signal, is calculated as follows:

for the common control resource set:

$$a_{k,l} = \beta_{DMRS}^{PDCCH} \cdot r_l(3n + k')$$

$$k = (nN_{sc}^{RB} + 4k' + 1)$$

$$k' = 0,1,2$$

$$n = 0,1,...$$

with a reference point for k being the common reference point; and

for the at least one other control resource set:

$$a_{k,l} = \beta_{DMRS}^{PDCCH} \cdot r_l(3n + k')$$

$$k = (nN_{sc}^{RB} + 4k' + 1 + E) \, mod \, F$$

$$k' = 0,1,2$$

$$n = 0,1,...$$

with a reference point for k being the lower limit point, E being a shift in number of subcarriers between the lower limit point and the common reference point, and F being the cycle length in number of subcarriers.

According to a fourth aspect of the disclosure, a base station is presented. The base station is configured for sequence mapping of demodulation reference signals of multiple control resource sets of a serving cell provided by the base station and at least one processor, and at least one memory storing instructions that, when executed by the at least one processor, cause the base station at least to execute the method according to the methods described herein.

According to a fifth aspect of the disclosure, a computer program product comprising instructions which, when the program is executed by a computer, cause the computer to carry out the methods as described herein.

The above-noted aspects and features may be implemented in systems, apparatuses, methods, articles and non-transitory computer-readable media depending on the desired configuration. The subject disclosure may be implemented in and used with a number of different types of devices, including but not limited to cellular phones, tablet computers, wearable computing devices, portable media players, and any of various other computing devices.

This summary is intended to provide a brief overview of some of the aspects and features according to the subject disclosure. Accordingly, it will be appreciated that the above-described features are merely examples and should not be construed to narrow the scope of the subject disclosure in any way. Other features, aspects, and advantages of the subject disclosure will become apparent from the following detailed description, drawings and claims.

TERMINOLOGY

To facilitate understanding on the terminologies in the subject disclosure, the following list of the most relevant abbreviations is provided:

| | |
|---|---|
| 3GPP | 3rd Generation Partnership Program |
| 5G | 5th Generation 3GPP mobile communication system |
| 6G | 6th Generation 3GPP mobile communication system |
| BS | Base Station |
| BWP | Bandwidth Part |
| CBW | Channel Bandwidth |
| CCE | Control Channel Element |
| CORESET | Control Resource Set |
| CN | Core Network |
| CSS | Common Search Space |
| DCI | Downlink Control Information |
| DL | Downlink |
| eNB | LTE Base Station, E-UTRAN NodeB |

| FFT | Fast Fourier Transformation |
| gNB | 5G Base Station, 5G NodeB (also for 6G Base Stations) |
| ID | Identifier |
| MIB | Master Information Block |
| NG | Next Generation (NR for New Radio) |
| PBCH | Physical Broadcast Channel |
| PCell | Primary Cell |
| PDCCH | Physical Downlink Control Channel |
| PDSCH | Physical Downlink Shared Channel |
| PRB | Physical Resource Block |
| PSCells | Primary and Secondary cells |
| PSS | Primary Synchronization Signal |
| RB | Resource Block |
| RedCap | Reduced Capability |
| RNTI | Radio Network Temporary Identifier |
| RRC | Radio Resource Control |
| SCell | Secondary Cell |
| SCS | Subcarrier Spacing |
| SIB | System Information Block |
| SSB | Synchronization Signal Block |
| SSS | Secondary Synchronization Signal |
| TS | Technical Specification |
| UE | User Equipment |
| UL | Uplink |
| USS | User-specific Search Space |

BRIEF DESCRIPTION OF THE DRAWINGS

A better understanding of the subject disclosure may be obtained when the following detailed description of various embodiments is considered in conjunction with the following drawings, in which:

FIG. 1 shows a schematic diagram of an example wireless network.

FIG. 2 shows a schematic diagram of an example wireless device.

FIG. 3 shows a schematic diagram of an example network node.

FIG. 4A presents general concepts, parameters, and processes relating to reception of CORESETs. FIG. 4B presents the structure of CORESETS.

FIG. 5A illustrates the basic concept according to the disclosure. FIG. 5B illustrates advantages of the basic concept according to the disclosure.

FIG. 6 is a flow chart of DMRS sequence mapping of CORESETs according to the disclosure performed by a user equipment.

FIG. 7 is a flow chart of DMRS sequence mapping of CORESETs according to the disclosure performed by a base station.

FIG. 8 shows DMRS mapping according to a first embodiment for illustrative purposes.

FIG. 9 shows DMRS mapping according to a second embodiment according to the disclosure.

FIGs. 10A and 10B show DMRS mapping according to a third embodiment for illustrative purposes.

FIG. 11 is a flow chart of possible processes for reception of PDCCHs according to embodiments.

DETAILED DESCRIPTION

The examples and embodiments set forth below represent information to enable those skilled in the art to practice the subject disclosure. Upon reading the following description in light of the accompanying drawing figures, those skilled in the art will understand the concepts of the description and will recognize applications of these concepts not particularly addressed herein. It should be understood that these concepts and applications fall within the scope of the description.

In the following description, numerous specific details are set forth. However, it is understood that embodiments may be practiced without these specific details. In other instances, well-known circuits, structures, and techniques have not been shown in detail in order not to obscure the understanding of the description. Those of ordinary skill in the art, with the included description, will be able to implement appropriate functionality without undue experimentation.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to implement such feature, structure, or characteristic in connection with other embodiments whether or not explicitly described.

As used herein, "plurality" means two or more. As used herein, a "set" of items may include one or more of such items. As used herein, whether in the subject disclosure or the claims, the terms "comprising", "including", "carrying", "having", "containing", "involving", and the like are to be understood to be open-ended, i.e., to mean including but not limited to. Only the transitional phrases "consisting of" and "consisting essentially of", respectively, are closed or semi-closed transitional phrases with respect to claims. Use of ordinal terms such as "first", "second", "third", etc., in the claims or the subject disclosure to modify an element does not by itself connote any priority, precedence, or order of one element over another or the temporal order in which acts of a method are performed, but are used merely as labels to distinguish one element having a certain name from another element having a same name (but for use of the ordinal term) to distinguish the elements. As used herein, "and/or" and "at least one of" (irrespective of whether combined with "or" or "and") means that the listed items are alternatives, but the alternatives also include any combination of the listed items.

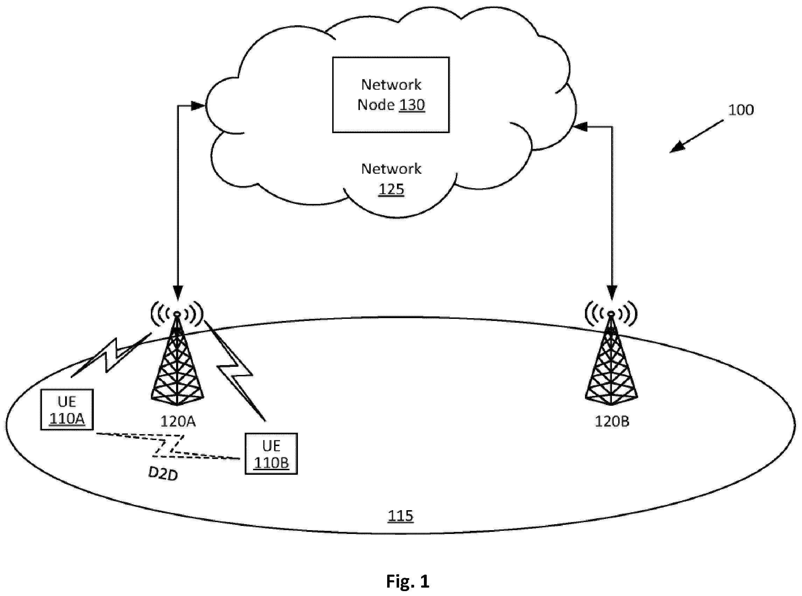

Before explaining the examples according to the subject disclosure in detail, certain general principles of a wireless communication system are briefly explained with reference to FIGS. 1 to 3 to assist in understanding the technology underlying the described examples. These general principles serve the purpose of explanation and should not be considered limiting.

FIG. 1 illustrates an example of a wireless network 100 that may be used for wireless communications. Wireless network 100 includes wireless devices, such as UEs 110 (e.g., 110A-110B), and network nodes 120/130, such as radio access nodes 120 (e.g., 120A-120B, which may be network nodes like eNBs, gNBs, etc.), connected to one or more further network nodes 130 over an interconnecting network 125. The network 100 may use any suitable deployment scenarios. UEs 110 within coverage area 115 may each be capable of communicating directly with radio access nodes 120 over a wireless or air interface. In some embodiments, UEs 110 may also be capable of communicating with each other via D2D communication.

As an example, UE 110A may communicate with radio access node 120A over a wireless or air interface. That is, UE 110A may transmit wireless signals to and/or receive wireless signals from radio access node 120A. The wireless signals may contain voice traffic, data traffic, control signals, and/or any other suitable information.

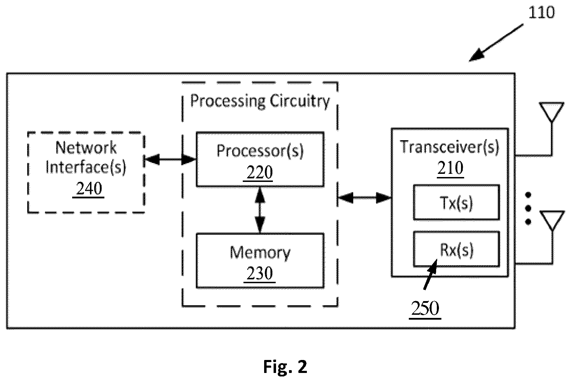

As used herein, the term "user equipment" (UE) (e.g., UE 110) has the full breadth of its ordinary meaning and may refer to any type of wireless device which may communicate with a network node (e.g., network node 120) and/or with another UE (e.g., different to UE 110) in a cellular or mobile or wireless communication system. Examples of UE are target device, D2D UE, machine type UE or UE capable of machine-to-machine (M2M) communication, personal digital assistant, tablet, mobile terminal, smart phone, laptop embedded equipped (LEE), laptop mounted equipment (LME), USB dongles, ProSe UE, vehicle-to-vehicle (V2V) UE, V2X UE, MTC UE, eMTC UE, FeMTC UE, UE Cat 0, UE Cat Ml, narrow band IoT (NB-IoT) UE, UE Cat NB1, mobile termination (MT) part of integrated access and backhaul (IAB), etc. Example embodiments of a UE are described in more detail below with respect to FIG. 2.

In some embodiments, an area of wireless signal coverage 115 associated with a radio access node 120 may be referred to as a cell. However, particularly with respect to the $5^{th}$ or $6^{th}$ generation mobile communication concepts of 3GPP, beams, such as the herein described multicast radio beams (MRBs) may be used within cells for communication.

With respect to a beam-based mobile communication system, the radio access node 120 (base station) may transmit a beamformed signal to the UE 110 in one or more transmit directions (transmission beam, Tx beam). The UE 110 may receive the beamformed signal from the base station 120 in one or more receive directions (reception beam, Rx beam). The UE 110 may also transmit a beamformed signal to the base station 120 in one or more directions and the base station 120 may receive the beamformed signal from the UE 110 in one or more directions. The base station 120 and the UE 110 may determine the best receive and transmit directions, e.g., *best* in the sense of these directions leading to the highest link quality or fulfilling other quality conditions in the most suitable manner, for each of the base station/UE pairs.

The interconnecting network 125 may refer to any interconnecting system capable of transmitting audio, video, signals, data, messages, etc., or any combination of the preceding. The interconnecting network 125 may include all or a portion of a public switched telephone network (PSTN), a public or private data network, a local area network (LAN), a metropolitan area network (MAN), a wide area network (WAN), a local, regional, or global communication or computer network such as the Internet, a wireline or wireless network, an enterprise intranet, or any other suitable communication link, including combinations thereof.

In some embodiments, the network node 130 may be a core network node, managing the establishment of communication sessions and other various other functionalities for UEs 110. Examples of network node 130 may include mobile switching center (MSC), MME, serving gateway (SGW), packet data network gateway (PGW), operation and maintenance (O&M), operations support system (OSS), SON, positioning node (e.g., Enhanced Serving Mobile Location Center, E-SMLC), location server node, Minimization of Drive Tests (MDT) node, etc. UEs 110 may exchange certain signals with the network node 130 using the non-access stratum (NAS) layer. In non-access stratum signaling, signals between UEs 110 and the network node 130 may be transparently passed through the radio access network. In some embodiments, radio access nodes 120 may interface with one or more network nodes 130 over an internode interface.

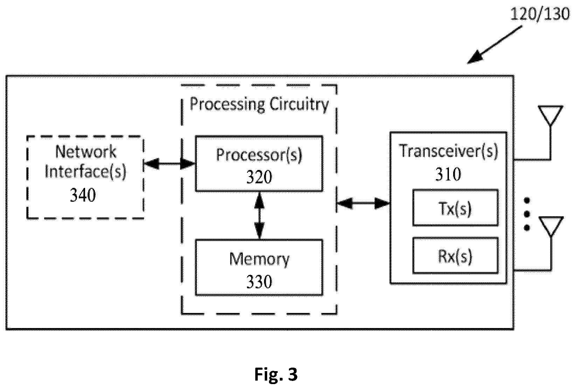

As used herein, the term "network node" has the full breadth of its ordinary meaning and may correspond to any type of radio access node (e.g., radio network node 120) or any network node, which may communicate with a UE and/or with another network node in a cellular or mobile or wireless communication system. Examples of network nodes are NodeB, MeNB, SeNB, a network node may belonging to MCG or SCG, base station (BS), multistandard radio (MSR) radio access node such as MSR BS, eNodeB, network controller, radio network controller (RNC), base station controller (BSC), relay, distributed unit (DU) part of integrated access and backhaul (IAB), donor node controlling relay, base transceiver station (BTS), access point (AP), transmission point, transmission node, RRU, RRH, node in distributed antenna system (DAS), core network node (e.g., MSC, MME, etc.), O&M, OSS, Self-organizing Network (SON), positioning node (e.g., E-SMLC), MDT, test equipment, etc. Example embodiments of a network node are described in more detail below with respect to FIG. 3.

In some embodiments, network node 120 may be a distributed radio access node. The components of the radio access node 120, and their associated functions, may be separated into two main units (or sub-radio network nodes) which may be referred to as the central unit (CU) and the distributed unit (DU). Different distributed radio network node architectures are possible. For instance, in some architectures, a DU may be connected to a CU via dedicated wired or wireless link (e.g., an optical fiber cable) while in other architectures, a DU may be connected a CU via a transport network. Also, how the various functions of the radio access node 120 are separated between the CU(s) and DU(s) may vary depending on the chosen architecture.

In some embodiments, radio access nodes 120 may communicate with each other over terrestrial or other connections. The communication between the radio access nodes 120 may, e.g., in a 5G / 6G communication system may be achieved by using an Xn interface connecting the radio access nodes 120.

Exemplary wireless communication systems are architectures standardized by the 3rd Generation Partnership Project (3GPP). A fundamental 3GPP based development is often referred to as the Long-Term Evolution (LTE) of the Universal Mobile Telecommunications System (UMTS) radio-access technology (RAT). The various development stages of the 3GPP specifications are referred to as releases. Further developments of the LTE are often referred to as LTE Advanced (LTE-A). The LTE (LTE-A) employs a radio mobile architecture known as the Evolved Universal Terrestrial Radio Access Network (E-UTRAN) and a core network known as the Evolved Packet Core (EPC). Base stations of such systems are known as evolved or enhanced Node Bs (eNBs) and provide E-UTRAN features such as user plane Packet Data Convergence/Radio Link Control/Medium Access Control/Physical layer protocol (PDCP/RLC/MAC/PHY) and control plane Radio Resource Control (RRC) protocol terminations towards the communication devices. Other RAT examples comprise those provided by base stations of systems that are based on technologies such as WLAN and/or Worldwide Interoperability for Microwave Access (WiMax). A base station may provide coverage for an entire cell or similar radio service area. Core network elements include Mobility Management Entity (MME), Serving Gateway (S-GW) and Packet Gateway (P-GW).

An example of a suitable communications system for this disclosure is, e.g., the 5G or 6G concept. Network architecture in such NR communication systems may be similar to that of Long LTE-A. Base stations of NR systems may be known as next generation Node Bs (gNBs). Changes to the network architecture may depend on the need to support various radio technologies and finer Quality of Service (QoS) support, and some on-demand requirements for QoS levels to support Quality of Experience (QoE) of user point of view. Also network aware services and applications, and service and application aware networks may bring changes to the architecture. Those are related to Information Centric Network (ICN) and User-Centric Content Delivery Network (UC-CDN) approaches. NR may use multiple input-multiple output (MIMO) antennas, many more base stations or nodes than the LTE (a so-called small cell concept), including macro sites operating in co-operation with smaller stations and perhaps also employing a variety of radio technologies for better coverage and enhanced data rates.

Future networks may utilize network functions virtualization (NFV) which is a network architecture concept that proposes virtualizing network node functions into "building blocks" or entities that may be operationally connected or linked together to provide services. A virtualized network function (VNF) may comprise one or more virtual machines running computer program codes using standard or general type servers instead of customized hardware. Cloud computing or data storage may also be utilized. In radio communications this may mean node operations to be carried out, at least partly, in a server, host or node operationally coupled to a remote radio head. It is also possible that node operations will be distributed among a plurality of servers, nodes, or hosts. It should also be understood that the distribution of labor between core network operations and base station operations may differ from that of the LTE or even be non-existent.

An example 5G core network (CN) comprises functional entities (which may also be similar in 6G). The CN is connected to a UE via the radio access network (RAN). An UPF (User Plane Function) whose role is called PSA (PDU Session Anchor) may be responsible for forwarding frames back and forth between the DN (data network) and the tunnels established over the 5G towards the UEs exchanging traffic with the data network (DN). The UPF is controlled by an SMF (Session Management Function) that receives policies from a PCF (Policy Control Function). The CN may also include an AMF (Access & Mobility Function).

Generally, all concepts disclosed herein may be applicable to different communication networks, comprising but not limited to LTE, LTE-A, 5G, 5G advanced, 6G, and other future or already implemented networks.

FIG. 2 is a schematic diagram of an apparatus for the UE. In an embodiment, the apparatus may comprise the UE, in yet another embodiment the apparatus is comprised in the UE, and in another embodiment the apparatus is the UE. The apparatus may comprise a wireless device. The apparatus may comprise at least one processor 220 and at least memory 230 storing computer program instructions that, when executed by the at least one processor 220, cause the apparatus to carry out the embodiments of the UE 110 described herein. In such examples, method processes may also be distributed among the at least one processor 220 and not all processors 220 execute all processes described herein. UE 110 includes a transceiver 210, processor 220, memory 230, and a network interface 240. In some embodiments, the transceiver 210 facilitates transmitting wireless signals to and receiving wireless signals from radio access node 120 (e.g., via transmitter(s) (Tx), receiver(s) (Rx) 250 and antenna(s)). The processor 220 executes instructions to provide some or all of the functionalities described herein as being provided by UE 110, and the memory 230 stores the instructions executed by the processor 220. In some embodiments, the processor 220 and the memory 230 form processing circuitry.

The processor 220 may include any suitable combination of hardware to execute instructions and manipulate data to perform some or all of the described functions of UE 110 described herein. In some embodiments, the processor 220 may include, for example, one or more computers, one or more central processing units (CPUs), one or more microprocessors, one or more application specific integrated circuits (ASICs), one or more field programmable gate arrays (FPGAs) and/or other logic.

The memory 230 is generally operable to store instructions, such as a computer program, software, an application including one or more of logic, rules, algorithms, code, tables, etc. and/or other instructions capable of being executed by a processor 220. Examples of memory 230 include computer memory (for example, Random Access Memory (RAM) or Read Only Memory (ROM)), mass storage media for example, a hard disk), removable storage media (for example, a Compact Disk (CD) or a Digital Video Disk (DVD)), and/or or any other volatile or non-volatile, non-transitory computer-readable and/or computer-executable memory devices that store information, data, and/or instructions that may be used by the processor 220 of UE 110. For example, the memory 230 includes computer program code causing the processor 220 to perform processing according to the methods described herein.

The network interface 240 is communicatively coupled to the processor 220 and may refer to any suitable device operable to receive input for UE 110, send output from UE 110, perform suitable processing of the input or output or both, communicate to other devices, or any combination thereof. The network interface 240 may include appropriate hardware (e.g., port, modem, network interface card, etc.) and software, including protocol conversion and data processing capabilities, to communicate through a network.

Other embodiments of UE 110 may include additional components beyond those shown in FIG. 2 that may be responsible for providing certain aspects of the wireless device's functionalities, including any of the functionalities described herein and/or any additional functionalities (including any functionality necessary to support the mechanisms according to the subject disclosure). As an example, UE 110 may include input devices and circuits, output devices, and one or more synchronization units or circuits, which may be part of the processor 220. Input devices include mechanisms for entry of data into UE 110. For example, input devices may include input mechanisms, such as a microphone, input elements, a display, etc. Output devices may include mechanisms for outputting data in audio, video and/or hard copy format. For example, output devices may include a speaker, a display, etc.

In some embodiments, the wireless device UE 110 may comprise a series of modules configured to implement the functionalities of the wireless device described herein. Moreover, in some embodiments, the UE 110 may also comprise means for the functionalities described herein. A non-transitory computer readable medium with computer executable instructions stored thereon executed by the processor 220 of the UE 110 to perform the functionalities as described herein may also be provided.

It will be appreciated that the various modules may be implemented as combination of hardware and software, for instance, the processor, memory, and transceiver(s) of UE 110 shown in FIG. 2. Some embodiments may also include additional modules to support additional and/or optional functionalities.

FIG. 3 is a schematic diagram of an example of an apparatus for a radio access node 120 or network node 130. The apparatus may comprise at least one processor 320 and at least memory 330 storing computer program instructions that, when executed by the at least one processor 320, cause the apparatus to carry out the embodiments of the core network node 130 or radio access node 120 described herein. In such examples, method processes may also be distributed among the at least one processor 320 and not all processors 320 execute all processes described herein. The example radio access node 120 or core network node 130 may include one or more of a transceiver 310, processor 320, memory 330, and network interface 340. In some embodiments, the transceiver 310 facilitates transmitting wireless signals to and receiving wireless signals from wireless devices, such as UE 110 (e.g., via transmitter(s) (Tx), receiver(s) (Rx), and antenna(s)). The processor 320 executes instructions to provide some or all of the functionalities described herein as being provided by the radio access node 120 or the core network node 130, the memory 330 stores the instructions executed by the processor 320. In some embodiments, the processor 320 and the memory 330 form processing circuitry. The network interface 340 may communicate signals to backend network components, such as a gateway, switch, router, Internet, Public Switched Telephone Network (PSTN), core network nodes or radio network controllers, etc.

The processor 320 may include any suitable combination of hardware to execute instructions and manipulate data to perform some or all of the described functions of the radio access node 120 or the core network node 130, such as those described herein. In some embodiments, the processor 320 may include, for example, one or more computers, one or more central processing units (CPUs), one or more microprocessors, one or more application specific integrated circuits (ASICs), one or more field programmable gate arrays (FPGAs) and/or other logic.

The memory 330 is generally operable to store instructions, such as a computer program, software, an application including one or more of logic, rules, algorithms, code, tables, etc. and/or other instructions capable of being executed by a processor 320. Examples of memory 330 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non- transitory computer-readable and/or computer-executable memory devices that store information. For example, the memory 330 includes computer program code causing the processor 320 to perform processing according to the methods described herein.

In some embodiments, the network interface 340 is communicatively coupled to the processor 320 and may refer to any suitable device operable to receive input for the radio access node 120 or the core network node 130, send output from the radio access node 120 or the network node 130, perform suitable processing of the input or output or both, communicate to other devices, or any combination of the preceding. The network interface 340 may include appropriate hardware (e.g., port, modem, network interface card, etc.) and software, including protocol conversion and data processing capabilities, to communicate through a network.

Other embodiments of the radio access node 120 or the network node 130 may include additional components beyond those shown in FIG. 3 that may be responsible for providing certain aspects of the node's functionalities, including any of the functionalities described herein and/or any additional functionalities (including any functionality necessary to support the solutions described herein). The various different types of radio access nodes or core network nodes may include components having the same physical hardware but configured (e.g., via programming) to support different radio access technologies, or may represent partly or entirely different physical components.

Processors, interfaces, and memory similar to those described with respect to FIG. 3 may be included in other nodes (such as UE 110, network node 120, etc.). Other nodes may optionally include or not include a wireless interface (such as the transceiver described in FIG. 3).

In some embodiments, the radio access node 120 or the core network node 130 may comprise a series of modules configured to implement the functionalities of the radio access node 120 or the core network node 130 described herein. Moreover, in some embodiments, the radio access node 120 or the core network node 130 may also comprise means for the functionalities described herein. A non-transitory computer readable medium with computer executable instructions stored thereon executed by the processor 320 of the network node 120/130 to perform the functionalities as described herein may also be provided.

It will be appreciated that the various modules may be implemented as combination of hardware and software, for instance, the processor, memory, and transceiver(s) of the radio access node 120 or the core network node 130 shown in FIG. 3. Some embodiments may also include additional modules to support additional and/or optional functionalities.

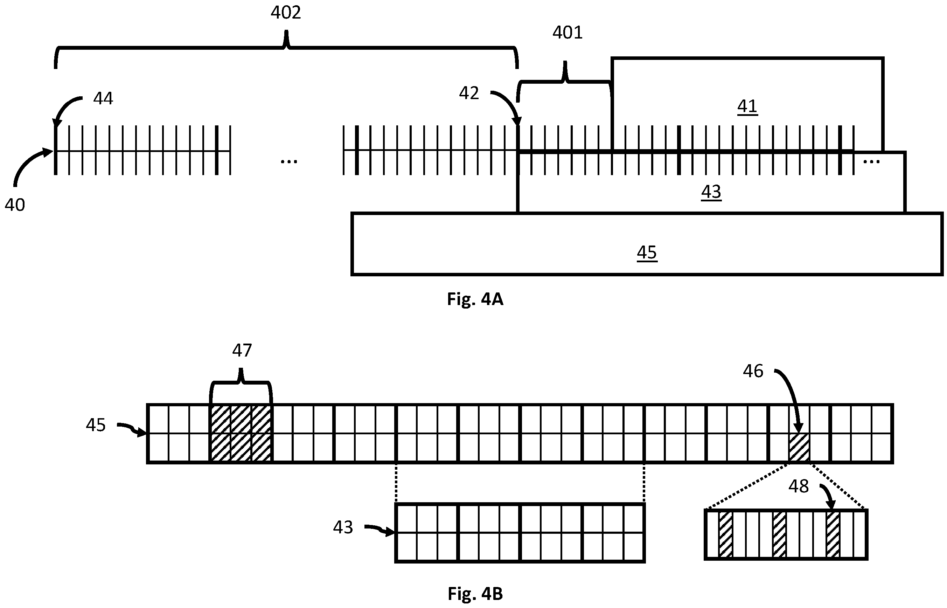

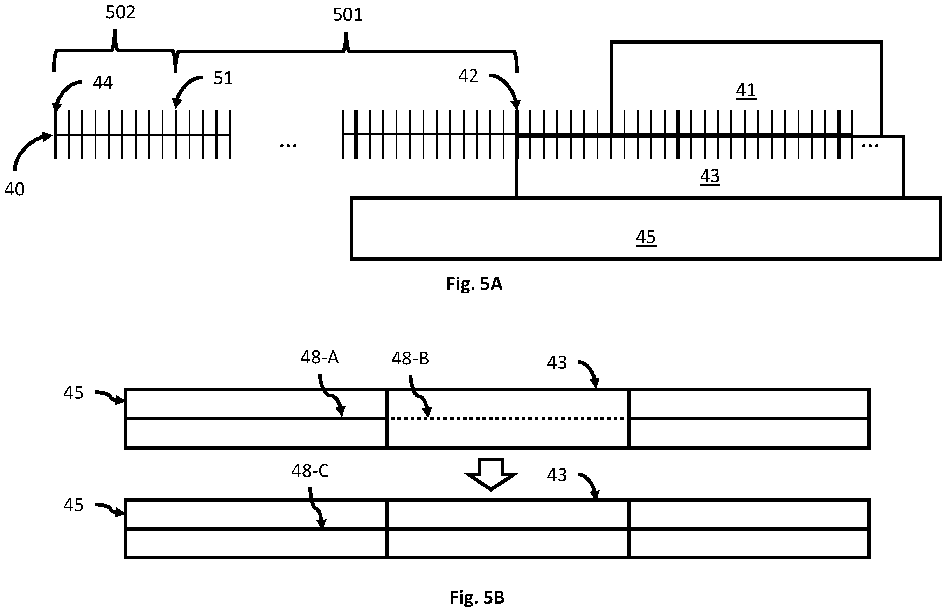

Before referring to FIGs. 5A to 11 and describing principles according to the disclosure, some background information on CORESETs and DMRS will be provided with respect to FIGs. 4A and 4B.

FIG. 4A presents general concepts, parameters, and processes relating to reception of CORESETs as currently defined, e.g., for 5G (e.g., in TS38.101, TS38.211, TS38.331 etc.). The base line of FIG. 4A relates to the subcarriers (each subcarrier is depicted with a vertical line) of a network carrier 40, i.e., the horizontal axis of FIG. 4A is the frequency. 12 subcarriers form a resource block (RB), which is indicated with the bold vertical lines. When a UE 110 wants to connect to a BS 120 (or a cell created by the BS 120), the UE searches for a System Synchronization Block (SSB) from the BS 120 and may find SSB 41 anywhere at predefined synchronization raster points in the frequency domain of the network carrier 40. The SSB 41 may comprise a Primary Synchronization Signal (PSS), a Secondary Synchronization Signal (SSS), and a Physical Broadcast Channel (PBCH). The PBCH carries the Master Information Block (MIB). The SSB candidate location may be set via a synchronization raster (as specified, e.g., in TS38.101) for initial access purposes for PSCells or can be configured for SCells. Each valid synchronization raster point may define a candidate location for the middle point of SSB (in frequency).

In the MIB, the UE 110 may find information that indicates to the UE 110 where a common CORESET 43, e.g., CORESET#0, which is needed for all UEs 110 to retrieve system information carrying cell access related information, e.g., System Information Block 1 (SIB1), is located. A CORESET defines a set of physical resources (e.g., a specific area on the NR downlink resource grid) and a set of parameters that are used to carry PDCCH. The CORESET region is localized to a specific region in the frequency domain and to 1, 2, or 3 Orthogonal Frequency-Division Multiplexing (OFDM) symbols in time domain. A CORESET is equivalent to a control region in LTE with the difference that a control region in LTE spreads across the whole channel bandwidth (CBW) and a CORESET is localized within each BWP.

The CORESET#0 43 is, thus, defined with respect to - or in other words - in relation to the received SSB 41. In frequency domain, a reference point 42, which is a first (lowest) subcarrier of the CORESET#0 43, may be indicated in MIB to the UE 110, for example, by indicating a gap 401 between the first (lowest) subcarrier or generally the lowest frequency position of the SSB 41 and the first subcarrier of the CORESET#0 43. Such a gap may be indicated with two parameters, e.g., one parameter for the number of full RBs between the beginning of the SSB 41 and the CORESET#0 43 and one parameter for the number of subcarriers (in addition to the number of full RBs) between the beginning of the SSB 41 and the CORESET#0 43. The first parameter may be denoted as RB_offset and the second parameter denoted as ssb-SubcarrierOffset. In some embodiments, only the second parameter may be indicated (that means, the RB_offset may be omitted, i.e., is equal to 0).

In the example of FIG. 4A, the RB_offset is 0 (or not indicated) and the ssb-SubcarrierOffset is 7. The UE 110 may then determine the location of the CORESET#0 43 based on the reference point 42. This reference point 42 is also the reference point for the determination of DMRS transmitted via CORESET#0. The UE 110 may then perform blind decoding in the CORESET#0 to find PDCCHs for retrieving SIB 1. SIB 1 indicates to the UE 110 where a so-called Point A 44 is. Point A 44 is a basic reference point for all resource grids in the frequency domain, is the center of the subcarrier 0 of a common resource block 0 of the lowest resource grid, and can be outside of the bandwidth of the network carrier 40. In the example of FIG. 4A, Point A 44 is the first subcarrier of the network carrier 40.

The gap 402 to Point A 44 may be indicated to the UE 110 by a parameter offsetToPointA, which defines the frequency offset between point A 44 and the lowest subcarrier of the RB overlapping with SSB 41. Alternatively, Point A may be indicated as frequency offset between the lowest subcarrier of the CORESET#0 43 (reference point 42) and the Point A 44. If RB_offset is 0, the alternatives are equal. Point A 44 may also be indicated as absolute frequency point. As currently defined for 5G, Point A 44 may be the absolute frequency position in frequency defined by an offset with respect to the lowest subcarrier of the lowest resource block of the SSB 41 used by the UE 110 for initial cell selection and is signaled in SIB1. The signaling for Point A 44 is expressed in units of RBs assuming 15 kHz subcarrier spacing for frequency range 1 and 60 kHz subcarrier spacing for frequency range 2. The parameter offsetToPoint A takes values between 0 and 2199 (i.e., 12 bits), which is fine for SIB1 but would likely be too large for MIB. Hence, Point A 44 is only indicated in SIB1 and not known for the UE 110 when monitoring PDCCH in CORESET#0.

Based on Point A 44, further CORESET(s) may be configured for the UE 110, such as, e.g., the other CORESET 45. Locations (within the resource grid of the network carrier 40) of CORESETs 43, 45 in general are aligned on the resource grid of the network carrier 40, i.e., possible locations starting at a first subcarrier of an RB of the resource grid. As is also shown in FIG. 4A, multiple CORESETs 43, 45 can overlap in frequency (and time) domain, i.e., they can occur in (at least partially) overlapping symbols and in (at least partially) overlapping RBs.

FIG. 4B presents the structure of CORESETs in more detail. In this example, the CORESETs 43, 45 cover two OFDM symbols. CORESET#0 43 covers 12 RBs and the other CORESET 43 (e.g., CORESET#1, CORESET#2 etc.) covers 36 RBs. These are only examples and should not be interpreted to be limiting.

A CORESET 43, 45 is divided into a number of resource element groups 46 (REGs). A REG 46 corresponds to an RB and contains 12 subcarriers in frequency and 1 OFDM symbol in time. 6 REGs 46 form a control channel element 47 (CCE). Each REG 46 being part of a CCE which may carry a PDCCH that has its own DMRS 48, where 3 out of 12 subcarriers, e.g., subcarriers 1, 5, and 9 as shown in FIG. 4B, of the REG 46 carry the PDCCH DMRS 48. This means, resource elements of subcarriers 1, 5, and 9. As is also shown in FIG. 4B, overlapping CORESETs 43, 45 are aligned, that is, the DMRS 48 of the REGs 46 of both CORESETs 43, 45 would have the same position in frequency.

Although the frequency position would possibly be similar, the DMRS sequence of two CORESETs 43, 45 would according to the definition in TS38.211 v16.2.0, clauses 7.4.1.3.1 and 7.4.1.3.2 differ because the DMRS sequence to resource elements mapping is dependent on the reference point considered for a CORESET 43, 45, which is point 42 for CORESET#0 43 and point 44 for other CORESETs 45.

In TS38.211, the DMRS sequence is defined to be determined as follows: The UE shall assume the reference-signal sequence $r_l(m)$ for OFDM symbol $l$ is defined by

$$r_l(m) = \frac{1}{\sqrt{2}}(1 - 2 \cdot c(2m)) + j\frac{1}{\sqrt{2}}(1 - 2 \cdot c(2m+1)).$$

where the pseudo-random sequence c(i) is defined in clause 5.2.1. The pseudo-random sequence generator shall be initialized with

$$c_{\text{init}} = \left(2^{17}\left(N_{\text{symb}}^{\text{slot}}n_{\text{s,f}}^{\mu} + l + 1\right)(2N_{\text{ID}} + 1) + 2N_{\text{ID}}\right)\text{mod}2^{31}$$

where $l$ is the OFDM symbol number within the slot, $n_{\text{s,f}}^{\mu}$ is the slot number within a frame, and

- $N_{ID} \in \{0,1, ... ,65535)$ is given by the higher-layer parameter *pdcch-DMRS-ScramblingID* if provided

- $N_{ID} = N_{ID}^{cell}$ otherwise.

Hence, for the same scrambling identifier $N_{ID}$ the DMRS sequences are identical for different CORESETs 43, 45. Alternative sequence generations are conceivable as well, e.g., such that a set of different scrambling identifiers produces the same DMRS sequence.

However, the resource element mapping of this DMRS sequence is different and dependent on the respective reference point 42, 44. This is defined in TS38.211 as follows: The UE shall assume the sequence $r_l(m)$ is mapped to resource elements $(k, l)_{p,\mu}$ according to

$$a_{k,l}^{(p,\mu)} = \beta_{\text{DMRS}}^{\text{PDCCH}} \cdot r_l(3n + k')$$

$$k = nN_{\text{sc}}^{\text{RB}} + 4k' + 1$$

$$k' = 0,1,2$$

$$n = 0,1,...$$

where the following conditions are fulfilled

- they are within the resource element groups constituting the PDCCH the UE attempts to decode if the higher-layer parameter *precoderGranularity* equals *sameAsREG-bundle*,
- all resource-element groups within the set of contiguous resource blocks in the CORESET where the UE attempts to decode the PDCCH if the higher-layer parameter *precoderGranularity* equals *allContiguousRBs.*

The reference point for *k* is

- subcarrier 0 of the lowest-numbered resource block in the CORESET if the CORESET is configured by the PBCH or by the *controlResourceSetZero* field in the *PDCCH-ConfigCommon* IE,
- subcarrier 0 in common resource block 0 otherwise

The quantity $l$ is the OFDM symbol number within the slot.
The antenna port $p$ = 2000.
A UE not attempting to detect a PDCCH in a CORESET shall not make any assumptions on the presence or absence of DM-RS in the CORESET.
In absence of CSI-RS configuration, and unless otherwise configured, the UE may assume PDCCH DM-RS and SS/PBCH block to be quasi co-located with respect to Doppler shift, Doppler spread, average delay, delay spread, and, when applicable, spatial Rx parameters.
As can be seen, the reference point for determining the sequence index k is different for CORESET#0 43 (first bullet point) and for other CORESETs 45 (second bullet point). In other words, although both CORESETs 43, 45 may have the same sequence, the mapping of the sequence elements to resource elements (in frequency direction) differs, meaning that the DMRS for overlapping REGs differs.

The different reference points to the DMRS sequence to resource elements mapping resulted from the timing when CORESET#0 43 and other CORESETs 45 are known to the UE 110. The UE 110 needs to know where to find which PDCCH DMRS (i.e., sequence and mapping) of CORESET#0 43 before the UE 110 becomes aware of Point A 44, which is only known after decoding SIB 1. However, for receiving SIB 1, the UE 110 has to receive and decode a PDCCH of CORESET#0 43. Therefore, Point A 44 could not be used as reference point for CORESET#0. Moreover, if UE 110 would use reference point 42 for other CORESETs 45, a DMRS sequence mapping to subcarriers below (i.e., with a negative index starting from) reference point 42 would not be possible.

Since the CORESETs 43, 45 have a different DMRS sequence to resource elements mapping, it is not possible to share DMRS between these CORESETs 43, 45. Sharing of DMRS between different CORESETs 43, 45 is particularly advantageous when these CORESETs 43, 45 overlap, i.e., they share at least partially time and frequency resources. This means that without shared DMRS, a UE 110 needs to have two separate receiver processings, e.g., channel estimation processes, for the overlapping CORESETs 43, 45, which increases UE complexity. In addition, certain CORESET configuration options are not feasible for a scenario of overlapping CORESETs 43, 45. An example of such a scenario is wideband precoding (i.e., when higher-layer parameter precoderGranularity equals allContiguousRB). In this case, PDCCH DMRS is currently mapped to all REGs within the set of contiguous RBs in the CORESET where the UE attempts to decode the PDCCH.

Before going into detail when explaining FIGs. 5A to 11, it should be noted that all concepts described herein, although described, e.g., for one communication direction, e.g., for downlink communication, are applicable for the other direction as well, e.g., in the uplink (UL) or sidelink (i.e. communications between UEs) or backhaul link (i.e. communications between relay nodes) communication. Moreover, concepts described for one entity, e.g., a UE 110, are applicable to another entity, e.g., a base station or network node 120, when considering for example another communication direction or another network setting as will be apparent to the skilled person.

FIG. 5A illustrates the basic concept according to the disclosure. The general situation is the same as described with respect to FIG. 4A. However, a common reference point 51 for any PDCCH DMRS is introduced. This may also be called Point B in this disclosure. The common reference point 51 is used for defining the mapping of the DMRS sequence to the subcarriers, i.e., the DMRS sequence to resource elements mapping as described before. For example, the first element of the DMRS sequence may be mapped on the subcarrier (i.e., on the respective resource element covering one subcarrier and one symbol) at the common reference point 51. Based on the mapping, UE 110 determines the DMRS sequence elements transmitted on the PDCCH resources and uses them, e.g., in channel estimation (for DCI detection). The reference point 51 is defined with respect to CORESET#0 43, more exactly, with respect to the lowest subcarrier of CORESET#0 43, i.e., reference point 42.

In order to determine the common reference point 51, a first gap 501 (e.g., in number of subcarriers) may be indicated, which is the distance between the reference point 41 and the common reference point 51. Such an indication comprises a transmission (e.g., in MIB) of a parameter, which defines the number of subcarriers of the first gap 501, which defines the absolute position of the common reference point 51, or which can be used to determine the first gap 501 (e.g., as the parameter indicates the gap between the first subcarrier of the SSB 41 and the common reference point 41), and/or a predefinition of the first gap 501. The predefinition may comprise a predefinition for all network carriers or a predefinition according to a frequency band or a frequency range or the like. Alternatively or additionally, a second gap 502 may be indicated. The indication may also take any form as described above. Although the first and second gaps 501, 502 are described to be expressed in subcarriers, the actual definition may also be based on number of resource blocks (with a reference subcarrier spacing).

Point B 51 is known before reading the SIB1 (since it is indicated in MIB or predefined). This means that it is possible to share the DMRS between CORESET#0 43 and other CORESETs 45. Point B 51 provides reference point for PDCCH DMRS mapping of CORESETs 43, 45. In some examples, a different reference point, e.g., Point A 44 may be provided in a later phase in SIB 1 for a common RB grid and, possibly, PDSCH DMRS mapping of only other CORESETs 45.

It is noted that the first gap 501 may be 0 and Point B 51 may be equal to reference point 42. Point B 51 may be between Point A 44 and reference point 42 (as shown in FIG. 5A) or Point B 51 may be on a lower (theoretical) subcarrier than Point A 44 and, thus, outside the network carrier 40 as well as outside a common RB resource grid. In some embodiments, Point B 51 is designed such that all subcarriers, on which a PDCCH DMRS of the CORESETs 43, 45 can be mapped, have a non-negative index.

In some further embodiments, the same DMRS sequence to resource elements mapping may be applied for PDSCH DMRS. In current 5G mobile communication systems, PDSCH DMRS - similar to PDCCH DMRS - has two reference points in frequency, namely, the lowest subcarrier of CORESET#0 43, i.e., reference point 42, is the reference point for PDSCH DMRS carrying SIB 1 and Point A 44 is the reference point for PDSCH DMRS for other scenarios.

Therefore, the common reference point 51 may in some embodiments also be used as reference point for PDSCH DMRS.

FIG. 5B illustrates advantages of the basic concept according to the disclosure. In this example, the UE 110 monitors PDCCH from at least two search spaces, e.g., in two CORESETs 43, 45. The monitoring occasions for the search spaces relate to the same slot and, even the same two symbols. The two CORESETs 43, 45 overlap in frequency, e.g., CORESET#0 43 is nested in other CORESET 45. CORESET#0 43 and at least one CORESET 45 other than CORESET#0 43 may, in such an example, be frequency division multiplexed (FDM'ed) with each other at least in part of the frequency domain.

The upper part of FIG. 5B shows the situation as currently standardized for 5G. Both CORESETs 43, 45 would have their own DMRS 48, DMRS 48-A for CORESET 45 and DMRS 48-A for CORESET#0 43. In the part, where both CORESETs 43, 45 overlap, it is not sure for the UE monitoring the CORESETs, which DMRS 48 will be transmitted. This depends on whether the transmitted PDCCHs are associated to the CORESET#0 43 or to the other CORESET 45. Therefore, the UE 110 needs to try both possible DMRS sequence to resource element mappings for receiving and successfully decoding a respective PDCCH.

The lower part of FIG. 5B shows the improvement of the herein presented solution. Both CORESETs 43, 45 share the same DMRS sequence to resource elements mapping and have the same DMRS 48-C. Therefore, irrespectively whether the PDCCH belongs to CORESET#0 43 or CORESET 45, the same DMRS 48-C can be used for receiver processing. This is particularly relevant if both CORESETs 43, 45 fully overlap, i.e., share the same resources. However, the presented solution is not only relevant in overlapping scenarios but also reduces the complexity of the UEs 110 in non-overlapping scenarios and do not require the UE 110 to distinguish scenarios in which CORESETs 43, 45 overlap or not. It is noted that the CORESET#0 43 and the other CORESETs 45 (dedicated to one or more UEs) may be considered to form a single super-CORESET. CORESET#0 43 may, in some embodiments, be a subset of the at least other CORESET.

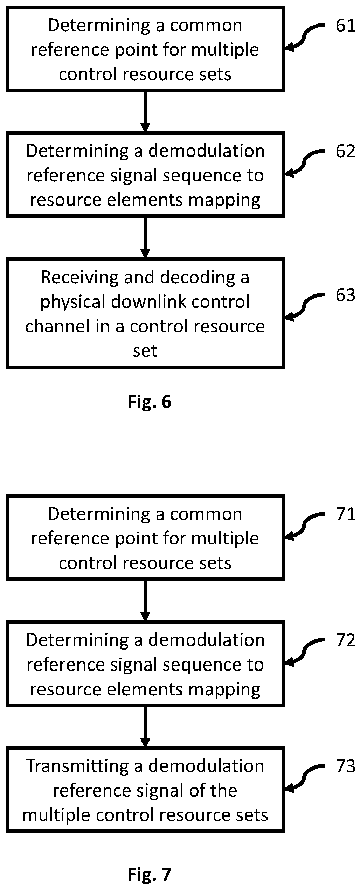

FIG. 6 is a flow chart of DMRS sequence mapping of CORESETs according to the disclosure performed by a user equipment, e.g., UE 110, in a mobile communication system, e.g., 5G, 6G, and the like. The general method concerns demodulation reference signal sequence mapping of multiple control resource sets, e.g., CORESETs 43, 45 of a serving cell (provided by a base station). It is noted that method processes described herein may generally reflect algorithms implemented in the respective devices and executed by one or more of their processor(s).

In some embodiments, the multiple control resource sets may comprise a common control resource set (CORESET#0 43) for receiving a physical downlink control channel (PDCCH) related to obtaining system information carrying cell access related information, e.g., a PDCCH indicating resources for PDSCH with SIB1, and at least one other control resource set (CORESET 45) for receiving other physical downlink control channels. In some embodiments, at least two of the multiple control resource sets overlap at least in part in time and frequency.

In box 61, the UE determines a common reference point, e.g., reference point 51, for the multiple control resource sets 43, 45. The common reference point 51 is a lowest subcarrier of the common control resource set 43. In some other embodiments, the common reference point 51 for the multiple control resource sets may be determined based on a lowest subcarrier of the common control resource set 43, e.g., reference point 42, and an offset thereto, e.g. first gap 501. In some embodiments, the common reference point 51 may be defined such that all subcarriers in a resource element grid common to the multiple control resource sets have a non-negative index. In some embodiments, the offset 501 may be predefined according to a maximum number of subcarriers supported by a network carrier, e.g., supported by any possible network carrier 40, of the mobile communication system, predefined according to a maximum number of subcarriers in a frequency range or frequency band of the mobile communication system, or indicated in initial configuration information. Such initial configuration information may, e.g., be comprised in MIB.

In box 62, the UE 110 determines a demodulation reference signal sequence to resource elements mapping for the multiple control resource sets based on the common reference point 51. The demodulation reference signal sequence to resource elements mapping is determined in a cyclic manner between a lower limit point and an upper limit point starting from the common reference point 51 in direction of increasing subcarrier indexes and ending one subcarrier lower than the common reference point 51. In some embodiments, the lower limit point and the upper limit point may be indicated in the system information carrying cell access related information and/or in dedicated radio resource control signaling. In some embodiments, the lower limit point may be the lowest subcarrier of a network carrier, e.g., the current network carrier 40, or the lowest subcarrier of a resource element grid common to the multiple control resource sets 43, 45, wherein the upper limit point may be the highest subcarrier of the network carrier 40 or another explicitly indicated point of a higher subcarrier than the highest subcarrier of the network carrier 40.

In some other examples, in which the common reference point 51 also is a lowest subcarrier of the common control resource set 43, the demodulation reference signal sequence to resource elements mapping may be defined block-wise for blocks of a number of demodulation reference signal elements, i.e., a number of sequence elements of the DMRS 48, alternately mapped in direction of increasing and/or decreasing subcarrier indexes. In some embodiments, a block size of the blocks of a number of demodulation reference signal sequence elements may be predefined for all network carriers, may be defined per frequency band, may be defined per frequency range, indicated in a master information block, indicated in other system information, and/or indicated in dedicated radio resource control signaling.

In such embodiments, determining the demodulation reference signal sequence to resource elements mapping may comprise mapping a first block starting from the common reference point in in direction of increasing subcarrier indexes, and mapping a subsequent second block starting from the common reference point in direction of decreasing subcarrier indexes. This may be repeated, i.e., the determining the demodulation reference signal sequence to resource elements mapping may further comprise mapping a third block starting from the end of the first block in direction of increasing subcarrier indexes, and mapping a fourth block starting from the end of the second block in direction of decreasing subcarrier indexes.

In yet other examples, in which the common reference point 51 is determined based on a lowest subcarrier of the common control resource set 43 and an offset 501, the determining of mapping may be achieved by the formula as currently defined in the above cited 5G standards.

In box 63, the UE 110 receives and decodes a physical downlink control channel in a control resource set, e.g. in the CORESET#0 43 or the other CORESET 45, of the multiple control resource sets based on the determined demodulation reference signal sequence to resource elements mapping. This means that the UE 110 may perform blind decoding to decode a received PDDCH in one of these CORESETs with, e.g., a channel estimation according to the DMRS sequence to resource elements mapping.

It is noted that in some embodiments, the multiple control resource sets may share a common scrambling identifier in order to ensure the same DMRS sequence. In some embodiments, the common scrambling identifier may be derived from a cell identifier (cell ID) of the serving cell and/or derived from radio resource control signaling. In some other embodiments, the multiple control resource set may also not share a common scrambling identifier but a group of scrambling identifiers may be defined that lead to the same DMRS sequence. Generally speaking, the DMRS sequences of the multiple CORESETs may be the same but may also be different in some cases.

In some embodiments, the method may also comprise determining a further demodulation reference signal sequence to resource elements mapping for physical downlink shared channel reception based on the common reference point, and receiving and decoding a physical downlink shared channel based on the further demodulation reference signal sequence to resource elements mapping. The further demodulation reference signal sequence to resource elements mapping for the PDSCH may be the same as for the PDCCH (i.e., the mapping of box 62, e.g., because another DMRS sequence or the like it mapped) or different but the common reference point 51 may be the same.

FIG. 7 is a flow chart of DMRS sequence mapping of CORESETs according to the disclosure performed by a base station, e.g., base station 120. The general method concerns demodulation reference signal sequence mapping of multiple control resource sets, e.g., CORESETs 43, 45 of a serving cell provided by the base station. It is noted that method processes described herein may generally reflect algorithms implemented in the respective devices and executed by one or more of their processor(s).

In some embodiments, the multiple control resource sets may comprise a common control resource set (CORESET#0 43) for receiving a physical downlink control channel (PDCCH) related to obtaining system information carrying cell access related information, e.g., a PDCCH indicating resources for PDSCH with SIB1, and at least one other control resource set (CORESET 45) for receiving other physical downlink control channels. In some embodiments, at least two of the multiple control resource sets 43, 45 overlap at least in part in time and frequency.

In box 71, BS 120 determines a common reference point, e.g., reference point 51, for the multiple control resource sets 43, 45. Determining at the BS 120 may also comprise that the BS 120 has a preconfigured common reference point 51 and/or the common reference point 51 may be defined in a specific manner. The common reference point 51 is a lowest subcarrier of the common control resource set 43.

In some other embodiments, the common reference point 51 for the multiple control resource sets may be defined for UEs 110 based on a lowest subcarrier of the common control resource set 43, e.g., reference point 42, and an offset thereto, e.g. first gap 501. In some embodiments, the common reference point 51 may be defined such that all subcarriers in a resource element grid common to the multiple control resource sets have a non-negative index. In some embodiments, the offset 501 may be predefined according to a maximum number of subcarriers supported by a network carrier, e.g., supported by any possible network carrier 40, of the mobile communication system, predefined according to a maximum number of subcarriers in a frequency range or frequency band of the mobile communication system, or indicated in initial configuration information. Such initial configuration information may, e.g., be comprised in MIB.

In box 72, the BS 120 determines a demodulation reference signal sequence to resource elements mapping for the multiple control resource sets based on the common reference point 51. The demodulation reference signal sequence to resource elements mapping is determined in a cyclic manner between a lower limit point and an upper limit point starting from the common reference point 51 in direction of increasing subcarrier indexes and ending one subcarrier lower than the common reference point 51. In some embodiments, the lower limit point and the upper limit point may be indicated to user equipments in the system information carrying cell access related information and/or in dedicated radio resource control signaling. In some embodiments, the lower limit point may be the lowest subcarrier of a network carrier, e.g., the current network carrier 40, or the lowest subcarrier of a resource element grid common to the multiple control resource sets 43, 45, wherein the upper limit point may be the highest subcarrier of the network carrier 40 or another explicitly indicated point of a higher subcarrier than the highest subcarrier of the network carrier 40.

In some other examples, in which the common reference point 51 also is a lowest subcarrier of the common control resource set 43, the demodulation reference signal sequence to resource elements mapping may be defined block-wise for blocks of a number of demodulation reference signal elements, i.e., a number of sequence elements of the DMRS 48, alternately mapped in direction of increasing and/or decreasing subcarrier indexes. In some embodiments, a block size of the blocks of a number of demodulation reference signal sequence elements may be predefined for all network carriers, may be defined per frequency band, may be defined per frequency range, indicated to user equipments in a master information block, indicated to user equipments in other system information, and/or indicated to user equipments in dedicated radio resource control signaling.

In such embodiments, determining the demodulation reference signal sequence to resource elements mapping may comprise mapping a first block starting from the common reference point in in direction of increasing subcarrier indexes, and mapping a subsequent second block starting from the common reference point in direction of decreasing subcarrier indexes. This may be repeated, i.e., the determining the demodulation reference signal sequence to resource elements mapping may further comprise mapping a third block starting from the end of the first block in direction of increasing subcarrier indexes, and mapping a fourth block starting from the end of the second block in direction of decreasing subcarrier indexes.

In yet other examples, in which the common reference point 51 is defined for user equipments based on a lowest subcarrier of the common control resource set 43 and an offset 501, the determining of mapping may be achieved by the formula as currently defined in the above cited 5G standards.

In box 73, the BS 120 transmits a demodulation reference signal of the multiple control resource sets based on the determined demodulation reference signal sequence to resource elements mapping, i.e., the same DMRS sequence elements in the CORESET#0 43 or the other CORESET 45 are mapped to the same resource elements. This means, the BS 120 may transmit a same DMRS sequence mapped to the same resource elements for all CORESETs 43, 45.

It is noted that in some embodiments, the multiple control resource sets may share a common scrambling identifier in order to ensure the same DMRS sequence. In some embodiments, the common scrambling identifier may be indicated to user equipments by a cell identifier (cell ID) of the serving cell and/or derived from radio resource control signaling. In some other embodiments, the multiple control resource set may also not share a common scrambling identifier but a group of scrambling identifiers may be defined that lead to the same DMRS sequence. Generally speaking, the DMRS sequences of the multiple CORESETs may be the same but may also be different in some cases.

In some embodiments, the method may also comprise determining a further demodulation reference signal sequence to resource elements mapping for physical downlink shared channel reception based on the common reference point, and receiving and decoding a physical downlink shared channel based on the further demodulation reference signal sequence to resource elements mapping. The further demodulation reference signal sequence to resource elements mapping for the PDSCH may be the same as for the PDCCH (i.e., the mapping of box 72, e.g., because another DMRS sequence or the like it mapped) or different but the common reference point 51 may be the same.

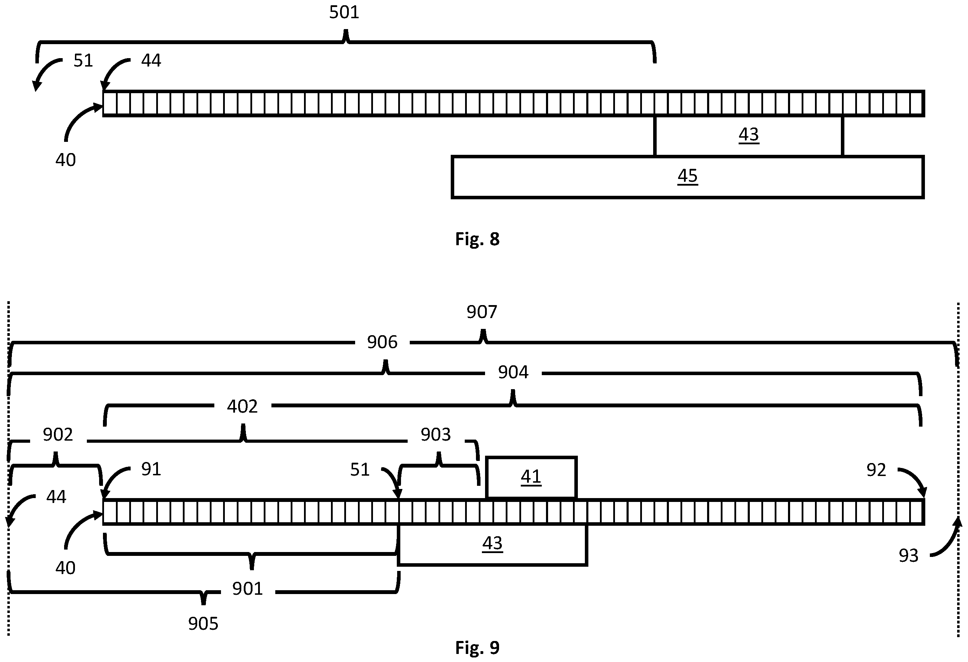

FIG. 8 shows DMRS mapping according to a first embodiment, in which the common reference point 51 for the multiple control resource sets is determined based on a lowest subcarrier of the common control resource set 43 and an offset 501 thereto. It is noted that this embodiment is shown for illustrative purposes of generally similar principles.

The rectangles shown on the network carrier 40 indicate RBs. In this embodiment, the reference point, Point B 51 is defined to be sufficiently far away from lowest subcarrier of CORESET#0 such that k > 0 for all possible CORESET locations within any possible network carrier 40. In the example shown in FIG. 8, the common reference point 51 is outside (or a lower subcarrier than the lowest subcarrier) of the network carrier 40 and Point A 44 (not relevant but shown for illustrative purposes) is the lowest subcarrier of the network carrier 40. The first gap 501 may be defined differently.

For example, the first gap 501 may be defined (standardized, predefined etc.) according to a maximum number of RBs that ensure that the common reference point 51 is defined such that all subcarriers in a resource element grid common to the multiple control resource sets have a non-negative index. The first gap 501 (e.g., defined in a number of subcarriers) may be, in some examples, 2x12x275 = 6600 (8k FFT) or 4x12x275 =13200 (16k FFT).

In another example, the first gap 501 may be defined (standardized, predefined etc.) according to maximum number of RBs per frequency range or band. Hence, each frequency range or each frequency band (or group of bands) may have the same first gap 501, such that all subcarriers in a resource element grid common to the multiple control resource sets have a non-negative index. In some embodiments, the definition (e.g., granularity, range etc.) of the first gap 501 may be band-dependent e.g. accounting the supported minimum or maximum channel bandwidth and/or the subcarrier spacing.

An advantage of this first embodiment is that the determination of the DMRS sequence to resource elements mapping is the same for all CORESETs 43, 45, i.e., starting on the same reference point 51 since this reference point is already known after the UE receives SSB 41. The currently standardized DMRS sequence generation and resource mapping can be applied, e.g., when the cell identifier is used as $N_{ID}$ for all CORESETs 43, 45.

FIG. 9 shows DMRS mapping according to a second embodiment, in which the common reference point 51 is a lowest subcarrier of the common control resource set 43. The rectangles shown on the network carrier 40 indicate RBs. In the example shown in FIG. 9, Point A 44 is outside of the network carrier 40. In the words of the first embodiment, the offset 501 would be 0. In this second embodiment, the DMRS sequence to resource elements mapping for CORESET#0 43 follows the rules as currently standardized and cited above.

For CORESETs 45 other than CORESET#0 43, DMRS sequence to resource element mapping may be a wrapping according to two points in frequency, Point C and Point D. The wrap-operation could be seen also as cyclic definition for index mapping of k. Three alternatives are discussed herein with respect to FIG. 9 but this should not be interpreted to be limiting. It is generally noted that - in the following alternatives - Point D may not be calculated or determined explicitly but the distance between Point C and Point D defined the cycle length.

Generally, in the examples of the second embodiment, a sequence mapping $a_{k,l}$ for demodulation reference signal sequence $r_l(m)$ and OFDM symbol $l$ to resource elements $(k, l)$, with $N_{sc}^{RB}$ being the number of subcarriers per resource block, and $\beta_{DMRS}^{PDCCH}$ being an amplitude scaling factor for the demodulation reference signal, may be calculated as follows:

For the common control resource set:

$$a_{k,l} = \beta_{DMRS}^{PDCCH} \cdot r_l(3n + k')$$

$$k = (nN_{sc}^{RB} + 4k' + 1)$$

$$k' = 0,1,2$$

$$n = 0,1,\ldots$$

with a reference point for k being the common reference point 51.
For the at least one other control resource set:

$$a_{k,l} = \beta_{DMRS}^{PDCCH} \cdot r_l(3n + k')$$

$$k = (nN_{sc}^{RB} + 4k' + 1 + E) \bmod F$$

$$k' = 0,1,2$$

$$n = 0,1,\ldots$$

with a reference point for k being the lower limit point, i.e., Point C, E being a shift in number of subcarriers between the lower limit point and the common reference point 51, and F being the cycle length in number of subcarriers (i.e., distance between Point C and Point D).

In the first alternative, the two points in frequency are obtained from the network carrier configuration indicated via SIB1. The network carrier 40 is called as SCS-specificCarrier in 5G containing, e.g., offsetToCarrier (offset in frequency domain between Point A and the lowest usable subcarrier on the network carrier 40 in number of RBs, using the subcarrierSpacing defined for this network carrier 40) and carrierBandwidth (in number of RBs) parameters. In the case of multiple numerologies (indicated with scs-SpecificCarrierList), the two points are defined separately for each subcarrier spacing. In this alternative, Point C may be the first subcarrier of the currently configured network carrier 40, i.e., point 91. Point 91 may be derived from the offsetToCarrier parameter. Point D may be the last subcarrier of the currently configured network carrier 40, i.e., point 92. Point 92 may be derived from the carrierBandwidth parameter.

In this example, the shift E is the distance 901 between point 91 and the common reference point 51, which can be determined based on the offsetToPointA 402, the offsetToCarrier 902, and the RB_Offset 903, and the cycle length F can be taken directly from the parameter carrierBandwidth and is the distance 904 (all in subcarriers).

For example, the shift E may be determined by E = (*offsetToPointA* -

$RB\_Offset - offsetToCarrier) * N_{SC}^{RB}$ , with RB_Offset between the SSB 41 and the CORESET#0 43 in full RBs. However, the distance 901 may also be indicated explicitly with another parameter, possibly also in number of RBs, e.g., offsetToCarrierFromCORESET0, which leads to

$$E = (offsetToCarrierFromCORESET0) * N_{SC}^{RB}$$ . The cycle length F may be determined by

$$F = (carrierBandwidth) * N_{SC}^{RB}$$ .

In the second alternative, Point A 44 as indicated via SIB 1 may be considered as Point C, that is, Point C = Point A 44. The last subcarrier of the network carrier 40 (point 92) may be considered as Point D. In this alternative, the shift E is the distance 905 and may be determined by $E = (offsetToPointA - RB\_Offset) * N_{SC}^{RB}$. The cycle length F is the distance 907 and may be determined by F = (*carrier Bandwidth* + *offsetToCarrier*) * $N_{SC}^{RB}$ .

In the third alternative, Point A 44 as indicated via SIB 1 may be considered as Point C, that is, Point C = Point A 44. A new information element may be added to SIB 1 to indicate the Point D, i.e., point 93. Point 93 is defined such that it is located on a subcarrier on a higher frequency than the last subcarrier of the network carrier 40. In this alternative, the shift E is the distance 905 and may be determined by $E = (offsetToPointA - RB\_Offset) * N_{SC}^{RB}$ . The cycle length F is the distance 907 and may be determined by F = *Point C - Point D* + 1.

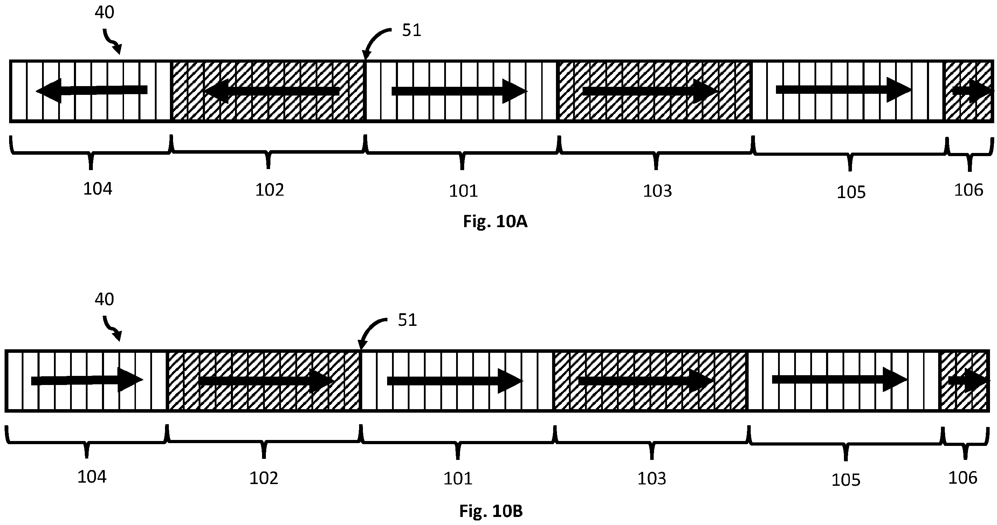

FIGs. 10A and 10B show DMRS mapping according to a third embodiment, in which the common reference point 51 is a lowest subcarrier of the common control resource set 43. The rectangles shown on the network carrier 40 indicate each one DMRS sequence element distributed in frequency. PDCCH DMRS sequences may be allocated block-wise on both sides of the common reference point 51. Two different approaches are shown in FIGs. 10A and 10B. It is noted that this embodiment is shown for illustrative purposes of generally similar principles.

In FIG. 10A, a first block 101 of a number of X1 DMRS elements S(0:X1-1) are allocated into positive subcarrier indexes from the common reference point 51 in positive index direction and a next block 102 of X1 DMRS elements S(X1:2*X1-1) are allocated into negative subcarrier indexes from the common reference point 51 in negative index direction. A third block 103 may then be allocated after the first block 101 of DMRS element into positive subcarrier indexes and a fourth block 104 again after the second block 102 in negative subcarrier indexes similar as the two blocks before. This is done until all subcarriers needed for transmission of CORESETs 43, 45 that require transmission of DMRS have been mapped, e.g., up to a maximum bandwidth of the mobile communication system.

In FIG. 10B, a first block 101 of a number of X1 DMRS elements S(0:X1-1) are allocated into positive subcarrier indexes from the common reference point 51 in positive index direction and a next block 102 of X1 DMRS elements S(X1:2*X1-1) are allocated into negative subcarrier indexes from the common reference point 51 but - different to FIG: 10A - in positive index direction. A third block 103 may then be allocated after the first block 101 of DMRS element into positive subcarrier indexes and a fourth block 104 again after the second block 102 in negative subcarrier indexes similar as the two blocks before. This is done until all subcarriers needed for transmission of CORESETs 43, 45 that require transmission of DMRS have been mapped, e.g., up to a maximum bandwidth of the mobile communication system.

X1 may refer to a PDCCH block length, where continuous allocation of PDCCH sequence is created. One example case for X1 may be 36 determined from 12 RBs in total for a mapping block and 3 assumed DMRS elements per RB. X1 can be longer if needed. In some examples, if the lowest subcarrier of the mobile communication system, e.g., Point A, has been reached (mapped) in negative direction or if the highest subcarrier of the network carrier 40 has been reached (mapped) in positive direction, the mapping may proceed block-wise only in the direction and/or subsequently one after another. This is shown with blocks 105 and 106 in FIGs. 10A and 10B.

If the common reference point 51 is in the center of the frequency range of the network carrier 40, PDCCH DMRS sequence length in positive indexes can be denoted as X2 and X1 may be determined to be X2/2, An equal number of negative indexes will be present. Negative numbers can be handled also with cyclic index over maximum number of positive indexes and total bandwidth is twice of X2. In such an example, rem or mod mathematical operators may be used. If rem/mod operators are used, PDCCH DMRS sequence may be allocated at negative indexes in reverse order compared to resulted sequence in negative number operation described earlier. PDCCH DMRS sequence elements in positive indexes can be seen as S(0:X2-1) and in negative indexes either S(0:X2-1) starting from low end of frequency range or (X2-1:0) starting from the common reference point 51 (as has been similarly shown in FIGs. 10A and 10B).

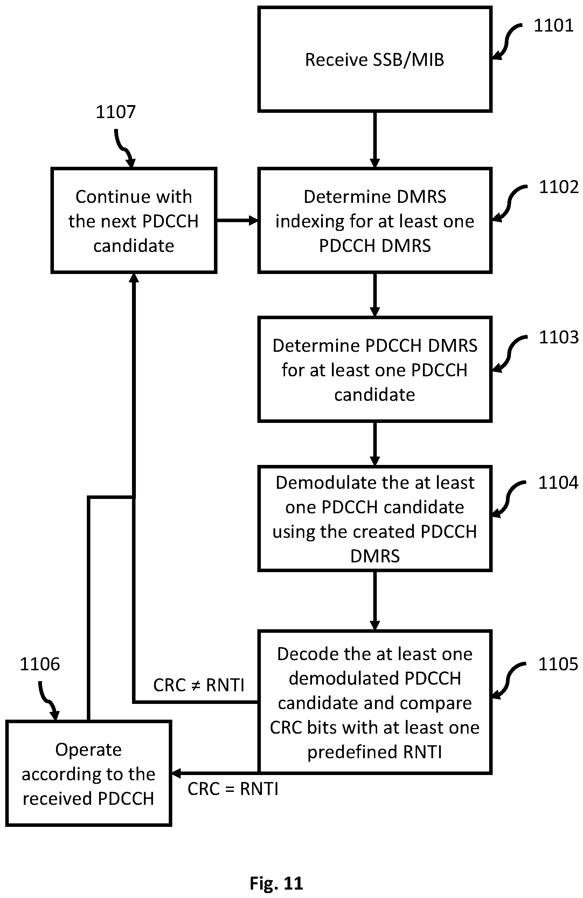

FIG. 11 is a flow chart of possible processes for reception of PDCCHs according to embodiments. In box 1101, the UE 100 searches and finds SSB 41, and becomes aware of CORESET#0 43 as described earlier. In box 1102, the UE 110 determines PDCCH DMRS indexing for at least one PDCCH based at least on Point B 51. This may be done as described before for the DMRS sequence to resource elements mapping. For example, the UE 110 may determine point 42 and an offset thereto to determine Point B 51 and maps the DMRS sequence to the resource elements for all CORESETs 43, 45 according to this common reference point 51 as currently defined in the 5G standards, i.e., reference point for k is always the common reference point. Alternatively, the determination may be done based on Point C and Point D or based on X1 as described above.

In box 1103, the UE 110 determines PDCCH DMRS for at least one PDCCH candidate. In box 1104, the UE 110 demodulates and, in box 1105, decodes the least one PDCCH candidate using the determined PDCCH DMRS. If the demodulation and decoding is successful, the UE 110 operates, as shown in box 1106, according to the received PDCCH (or DCI). Otherwise, as shown with box 1107, the UE 110 continues to box 1102.

In summary, the basic principle of the herein presented solution is that PDCCH DMRS sequence to resource elements mapping can be based on:

- the first subcarrier of the CORESET#0 43 and Point B 51, defined by an offset to the first subcarrier of the CORESET#0 43.

- the first subcarrier of CORESET#0 43, which is Point B 51, as well as Point C and Point D.

- the first subcarrier of CORESET#0 43, which is Point B 51, as well as X1 and/or X2. In this embodiment, Point B, Point C, and Point D can be defined with help of X1, e.g., Point B can be X1*B, where B is an integer/real number and may include negative numbers. Furthermore, Point D can be X1*D with similar definition of D being an integer/real number.

Generally, parameters for determining Point B, Point C, Point D, X1, and/or X2 can be specified and signaled via MIB/SIB1. X1 relates to PDCCH DMRS block length definition and could be refined by specification, too. For RRC configured CORESETs 45, it may also be possible to indicate Point B, Point C, and/or Point D explicitly. This may be done with respect to CORESET#0 (point 42) via indicating a gap (in subcarriers) to one or more of these points or with respect to Point A 44 via indicating a gap (in subcarriers) to one or more of these points. In cases when the UE 110 is not aware of the CORESET#0 location, this location or, particularly, point 42 may be indicated via RRC to UEs 110. In some examples, the indication may be done relative to Point A 44.

The proposed solution allows DMRS sharing for CORESETs 43, 45, in particular, for overlapping CORESETs 43, 45 that have a different number of RBs (e.g., 24 RBs and 96 RB), a different number of OFDM symbols (e.g., 1 Symbols and 2 Symbols), a different starting symbol, different allocation (e.g., DMRS are allocated either first over frequency and then over symbols or vice versa per CORESET 43, 45), or different repetition schemes. Repetition schemes may, e.g., relate to that repetition over multiple OFDMs symbols in time domain over slot(s) can be implemented if irregular DMRS allocation in time domain from slot to slot is present, repeated DMRS symbols may use orthogonal codes or scrambling sequences depending on use cases (e.g., orthogonal codes may be typical for coverage purposes and scrambling sequences for differentiating DMRS from other slot symbols, etc.), and/or scrambling sequences may use a cell beam indicator index for cell specific separation of DMRS sequences.

For enabling DMRS sharing, DMRS indexing should start from the same subcarrier (for the overlapping CORESETs), which is achieved by the common reference point 51 as described above. PDCCH DMRS may be configured with the same scrambling identifier for the overlapping CORESETs 43, 45. For CORESET#0 43, scrambling identifier may be derived from a cell identifier, that means, that DMRS sharing may require similar configuration for other CORESETs 43, 45 if the DMRS sequence generation is based on this scrambling identifier.

In addition to that, UE may have common channel estimation for PDCCH candidates in overlapping CORESETs 43, 45 if REG bundles (and/or CCEs) of the overlapping CORESETs are aligned in frequency and time and the overlapping CORESETs are configured with the same precoder granularity (wideband or narrowband). Thus, one single channel estimation can serve both CORESET#0 43 and other CORESETs 45. The advantages of the herein presented solution comprise a reduced specification complexity, a reduced UE complexity, an enablement of DMRS sharing between any CORESETs 43, 45, and an enablement of time/frequency overlap for any CORESETs 43, 45.

The herein described procedures may be applied per model or per functionality level (identified by an identifier) or across models or functionalities of a given entity, e.g., as a UE feature. It should be understood that the apparatuses described herein may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst embodiments have been described in relation to 6G or 5G, similar principles may be applied in relation to other networks and communication systems. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes exemplary embodiments, there are several variations and modifications which may be made to the disclosed solution without departing from the scope of the subject disclosure.

In general, the various exemplary embodiments may be implemented in hardware or special purpose circuits, software, logic or any combination thereof. Some aspects of the subject disclosure may be implemented in hardware, while other aspects may be implemented in firmware or software which may be executed by a controller, microprocessor or other computing device, although the subject disclosure is not limited thereto. While various aspects of the subject disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Example embodiments of the subject disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the figures may represent program processes, or interconnected logic circuits, blocks and functions, or a combination of program processes and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may comprise one or more of general-purpose computers, special purpose computers, microprocessors, digital signal processors (DSPs), application specific integrated circuits (ASICs), FPGA, gate level circuits and processors based on multicore processor architecture, as non-limiting examples.

Example embodiments of the subject disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Moreover, in accordance with the foregoing description, the following four sets of clauses reflect possible embodiments of the herein presented solution, which are further combinable between the sets of clauses. These clauses do not define the scope, which is solely defined by the appended claims.

**First set of clauses:**

1. A method for demodulation reference signal handling of multiple control resource sets of a serving cell, wherein the multiple control resource sets comprise a common control resource set for receiving a physical downlink control channel related to obtaining system information carrying cell access related information and at least one other control resource set for receiving other physical downlink control channels, the method being performed by a user equipment suitable for a mobile communication system and comprising:

- determining a common reference point for the multiple control resource sets;
- determining a demodulation reference signal sequence to resource elements mapping for the multiple control resource sets based on the common reference point; and
- receiving and decoding a physical downlink control channel in a control resource set of the multiple control resource sets based on the determined demodulation reference signal sequence to resource elements mapping.

2. The method of clause 1, wherein at least two of the multiple control resource sets overlap at least in part in time and frequency.

3. The method of clause 1 or clause 2, wherein the common reference point for the multiple control resource sets is determined based on a lowest subcarrier of the common control resource set and an offset thereto.

4. The method of clause 3, wherein the common reference point is defined such that all subcarriers in a resource element grid common to the multiple control resource sets have a non-negative index.

5. The method of clause 3 or clause 4, wherein the offset is predefined according to a maximum number of subcarriers supported by a network carrier of the mobile communication system, predefined according to a maximum number of subcarriers in a frequency range or frequency band of the mobile communication system, or indicated in initial configuration information.

6. The method of clause 1 or clause 2, wherein the common reference point is a lowest subcarrier of the common control resource set.

7. The method of clause 6, wherein the demodulation reference signal sequence to resource elements mapping is determined in a cyclic manner between a lower limit point and an upper limit point starting from the common reference point in direction of increasing subcarrier indexes and ending one subcarrier lower than the common reference point.

8. The method of clause 7, wherein the lower limit point and the upper limit point are indicated in the system information carrying cell access related information and/or in dedicated radio resource control signaling.

9. The method of clause 7 or clause 8, wherein the lower limit point is the lowest subcarrier of a network carrier or the lowest subcarrier of a resource element grid common to the multiple control resource sets, wherein the upper limit point is the highest subcarrier of the network carrier or another explicitly indicated point of a higher subcarrier than the highest subcarrier of the network carrier.

10. The method of clause 6, wherein the demodulation reference signal sequence to resource elements mapping is defined block-wise for blocks of a number of demodulation reference signal sequence elements alternately mapped in direction of increasing and/or decreasing subcarrier indexes.

11. The method of clause 10, wherein a block size of the blocks of a number of demodulation reference signal sequence elements is predefined for all network carriers, is defined per frequency band, is defined per frequency range, indicated in a master information block, indicated in other system information, and/or indicated in dedicated radio resource control signaling.

12. The method of clause 10 or clause 11, wherein determining the demodulation reference signal sequence to resource elements mapping comprises:

- mapping a first block starting from the common reference point in in direction of increasing subcarrier indexes; and
- mapping a subsequent second block starting from the common reference point in direction of decreasing subcarrier indexes.

13. The method of clause 12, wherein determining the demodulation reference signal sequence to resource elements mapping further comprises:

- mapping a third block starting from the end of the first block in direction of increasing subcarrier indexes; and
- mapping a fourth block starting from the end of the second block in direction of decreasing subcarrier indexes.

14. The method of any one of clauses 1 to 13, wherein the multiple control resource sets share a common scrambling identifier.

15. The method of clause 14, wherein the common scrambling identifier is derived from a cell ID of the serving cell and/or derived from radio resource control signaling.

16. The method of any one of clauses 1 to 15 further comprising:

- determining a further demodulation reference signal sequence to resource elements mapping for physical downlink shared channel reception based on the common reference point; and
- receiving and decoding a physical downlink shared channel based on the further demodulation reference signal sequence to resource elements mapping.

17. A user equipment suitable for a mobile communication system, the user equipment being configured for demodulation reference signal handling of multiple control resource sets of a serving cell, wherein the multiple control resource sets comprise a common control resource set for receiving a physical downlink control channel related to obtaining system information carrying cell access related information and at least one other control resource set for receiving other physical downlink control channels, and comprising:

at least one processor; and
at least one memory storing instructions that, when executed by the at least one processor, cause the user equipment at least to:

- determine a common reference point for the multiple control resource sets;

- determine a demodulation reference signal sequence to resource elements mapping for the multiple control resource sets based on the common reference point; and
- receive and decode a physical downlink control channel in a control resource set of the multiple control resource sets based on the determined demodulation reference signal sequence to resource elements mapping.

18. The user equipment of clause 17, wherein at least two of the multiple control resource sets overlap at least in part in time and frequency.

19. The user equipment of clause 17 or clause 18, wherein the common reference point for the multiple control resource sets is determined based on a lowest subcarrier of the common control resource set and an offset thereto.

20. The user equipment of clause 19, wherein the common reference point is defined such that all subcarriers in a resource element grid common to the multiple control resource sets have a non-negative index.

21. The user equipment of clause 19 or clause 20, wherein the offset is predefined according to a maximum number of subcarriers supported by a network carrier of the mobile communication system, predefined according to a maximum number of subcarriers in a frequency range or frequency band of the mobile communication system, or indicated in initial configuration information.

22. The user equipment of clause 17 or clause 18, wherein the common reference point is a lowest subcarrier of the common control resource set.

23. The user equipment of clause 22, wherein the demodulation reference signal sequence to resource elements mapping is determined in a cyclic manner between a lower limit point and an upper limit point starting from the common reference point in direction of increasing subcarrier indexes and ending one subcarrier lower than the common reference point.

24. The user equipment of clause 23, wherein the lower limit point and the upper limit point are indicated in the system information carrying cell access related information and/or in dedicated radio resource control signaling.

25. The user equipment of clause 23 or clause 24, wherein the lower limit point is the lowest subcarrier of a network carrier or the lowest subcarrier of a resource element grid common to the multiple control resource sets, wherein the upper limit point is the highest subcarrier of the network carrier or another explicitly indicated point of a higher subcarrier than the highest subcarrier of the network carrier.

26. The user equipment of clause 22, wherein the demodulation reference signal sequence to resource elements mapping is defined block-wise for blocks of a number of demodulation reference signal sequence elements alternately mapped in direction of increasing and/or decreasing subcarrier indexes.

27. The user equipment of clause 26, wherein a block size of the blocks of a number of demodulation reference signal sequence elements is predefined for all network carriers, is defined per frequency band, is defined per frequency range, indicated in a master information block, indicated in other system information, and/or in dedicated radio resource control signaling.

28. The user equipment of clause 26 or clause 27, wherein, for determining the demodulation reference signal sequence to resource elements mapping, the at least one processor is further configured to:

- map a first block starting from the common reference point in in direction of increasing subcarrier indexes; and
- map a subsequent second block starting from the common reference point in direction of decreasing subcarrier indexes.

29. The user equipment of clause 28, wherein, for determining the demodulation reference signal sequence to resource elements mapping, the at least one processor is further configured to:

- map a third block starting from the end of the first block in direction of increasing subcarrier indexes; and
- map a fourth block starting from the end of the second block in direction of decreasing subcarrier indexes.

30. The user equipment of any one of clauses 17 to 29, wherein the multiple control resource sets share a common scrambling identifier.

31. The user equipment of clause 30, wherein the common scrambling identifier is derived from a cell ID of the serving cell and/or derived from radio resource control signaling.

32. The user equipment of any one of clauses 17 to 31, wherein the at least one processor is further configured to:

- determine a further demodulation reference signal sequence to resource elements mapping for physical downlink shared channel reception based on the common reference point; and
- receive and decode a physical downlink shared channel based on the further demodulation reference signal sequence to resource elements mapping.

**EP 4 746 329 A1**

33. A method for demodulation reference signal handling of multiple control resource sets of a serving cell, wherein the multiple control resource sets comprise a common control resource set for receiving a physical downlink control channel related to obtaining system information carrying cell access related information and at least one other control resource set for receiving other physical downlink control channels, the method being performed by a base station providing the service cell for a mobile communication system and comprising:

- determining a common reference point for the multiple control resource sets;
- determining a demodulation reference signal sequence to resource elements mapping for the multiple control resource sets based on the common reference point; and
- transmitting a demodulation reference signal of the multiple control resource sets based on the determined demodulation reference signal sequence to resource elements mapping.

34. The method of clause 33, wherein at least two of the multiple control resource sets overlap at least in part in time and frequency.

35. The method of clause 33 or clause 34, wherein the common reference point for the multiple control resource sets is defined for user equipments based on a lowest subcarrier of the common control resource set and an offset thereto.

36. The method of clause 35, wherein the common reference point is defined such that all subcarriers in a resource element grid common to the multiple control resource sets have a non-negative index.

37. The method of clause 35 or clause 36, wherein the offset is predefined according to a maximum number of subcarriers supported by a network carrier of the mobile communication system, predefined according to a maximum number of subcarriers in a frequency range or frequency band of the mobile communication system, or indicated to user equipments in initial configuration information.

38. The method of clause 33 or clause 34, wherein the common reference point is a lowest subcarrier of the common control resource set.

39. The method of clause 38, wherein the demodulation reference signal sequence to resource elements mapping is determined in a cyclic manner between a lower limit point and an upper limit point starting from the common reference point in direction of increasing subcarrier indexes and ending one subcarrier lower than the common reference point.

40. The method of clause 39, wherein the lower limit point and the upper limit point are indicated to user equipments in the system information carrying cell access related information and/or in dedicated radio resource control signaling.

41. The method of clause 39 or clause 40, wherein the lower limit point is the lowest subcarrier of a network carrier or the lowest subcarrier of a resource element grid common to the multiple control resource sets, wherein the upper limit point is the highest subcarrier of the network carrier or another explicitly indicated point of a higher subcarrier than the highest subcarrier of the network carrier.

42. The method of clause 38, wherein the demodulation reference signal sequence to resource elements mapping is defined block-wise for blocks of a number of demodulation reference signal sequence elements alternately mapped in direction of increasing and/or decreasing subcarrier indexes.

43. The method of clause 42, wherein a block size of the blocks of a number of demodulation reference signal sequence elements is predefined for all network carriers, is defined per frequency band, is defined per frequency range, indicated to user equipments in a master information block, indicated to user equipments in other system information, and/or indicated to user equipments in dedicated radio resource control signaling.

44. The method of clause 42 or clause 43, wherein determining the demodulation reference signal sequence to resource elements mapping comprises:

- mapping a first block starting from the common reference point in in direction of increasing subcarrier indexes; and
- mapping a subsequent second block starting from the common reference point in direction of decreasing subcarrier indexes.

45. The method of clause 44, wherein determining the demodulation reference signal sequence to resource elements mapping further comprises:

- mapping a third block starting from the end of the first block in direction of increasing subcarrier indexes; and
- mapping a fourth block starting from the end of the second block in direction of decreasing subcarrier indexes.

46. The method of any one of clauses 33 to 45, wherein the multiple control resource sets share a common scrambling identifier.

47. The method of clause 46, wherein the common scrambling identifier is indicated to user equipments by a cell ID of the serving cell and/or by radio resource control signaling to user equipments.

48. The method of any one of clauses 33 to 47 further comprising:

- determining a further demodulation reference signal sequence to resource elements mapping for physical downlink shared channel transmission based on the common reference point; and
- transmitting a demodulation reference signal associated to physical downlink shared channels based on the further demodulation reference signal sequence to resource elements mapping.

49. A base station suitable for a mobile communication system, the base station being configured for demodulation reference signal handling of multiple control resource sets of a serving cell provided by the base station, wherein the multiple control resource sets comprise a common control resource set for receiving a physical downlink control channel related to obtaining system information carrying cell access related information and at least one other control resource set for receiving other physical downlink control channels, and comprising:

at least one processor; and
at least one memory storing instructions that, when executed by the at least one processor, cause the base station at least to:

- determine a common reference point for the multiple control resource sets;
- determine a demodulation reference signal sequence to resource elements mapping for the multiple control resource sets based on the common reference point; and
- transmit a demodulation reference signal of the multiple control resource sets based on the determined demodulation reference signal sequence to resource elements mapping.

50. The user equipment of clause 49, wherein at least two of the multiple control resource sets overlap at least in part in time and frequency.

51. The base station of clause 49 or clause 50, wherein the common reference point for the multiple control resource sets is defined for user equipments based on a lowest subcarrier of the common control resource set and an offset thereto.

52. The base station of clause 51, wherein the common reference point is defined such that all subcarriers in a resource element grid common to the multiple control resource sets have a non-negative index.

53. The base station of clause 51 or clause 52, wherein the offset is predefined according to a maximum number of subcarriers supported by a network carrier of the mobile communication system, predefined according to a maximum number of subcarriers in a frequency range or frequency band of the mobile communication system, or indicated to user equipments in initial configuration information.

54. The base station of clause 49 or clause 50, wherein the common reference point is a lowest subcarrier of the common control resource set.

55. The method of clause 54, wherein the demodulation reference signal sequence to resource elements mapping is determined in a cyclic manner between a lower limit point and an upper limit point starting from the common reference point in direction of increasing subcarrier indexes and ending one subcarrier lower than the common reference point.

56. The base station of clause 55, wherein the lower limit point and the upper limit point are indicated to user equipments in the system information carrying cell access related information and/or in dedicated radio resource control signaling.

57. The base station of clause 55 or clause 56, wherein the lower limit point is the lowest subcarrier of a network carrier or the lowest subcarrier of a resource element grid common to the multiple control resource sets, wherein the upper limit point is the highest subcarrier of the network carrier or another explicitly indicated point of a higher subcarrier than the highest subcarrier of the network carrier.

58. The base station of clause 54, wherein the demodulation reference signal sequence to resource elements mapping is defined block-wise for blocks of a number of demodulation reference signal sequence elements alternately mapped in direction of increasing and/or decreasing subcarrier indexes.

59. The base station of clause 58, wherein a block size of the blocks of a number of demodulation reference signal sequence elements is indicated to user equipments in a master information block, in the system information carrying cell access related information, and/or in dedicated radio resource control signaling.

60. The base station of clause 58 or clause 59, wherein, for determining the demodulation reference signal sequence to resource elements mapping, the at least one processor is further configured to:

- map a first block starting from the common reference point in in direction of increasing subcarrier indexes; and
- map a subsequent second block starting from the common reference point in direction of decreasing subcarrier indexes.

61. The base station of clause 60, wherein, for determining the demodulation reference signal sequence to resource elements mapping, the at least one processor is further configured to:

- map a third block starting from the end of the first block in direction of increasing subcarrier indexes; and
- map a fourth block starting from the end of the second block in direction of decreasing subcarrier indexes.

62. The base station of any one of clauses 49 to 61, wherein the multiple control resource sets share a common scrambling identifier.

63. The base station of clause 62, wherein the common scrambling identifier is indicated to user equipments by a cell ID of the serving cell and/or derived from radio resource control signaling.

64. The base station of any one of clauses 49 to 63, wherein the at least one processor is further configured to:

- determine a further demodulation reference signal sequence to resource elements mapping for physical downlink shared channel transmission based on the common reference point; and
- transmit a demodulation reference signal associated to physical downlink shared channels based on the further demodulation reference signal sequence to resource elements mapping.

**Second set of clauses:**

1. A method for sequence mapping of demodulation reference signals of multiple control resource sets of a serving cell, the method being performed by a user equipment and comprising:

- determining a common reference point for the multiple control resource sets, wherein the common reference point is a lowest subcarrier of a common control resource set;
- determining a demodulation reference signal sequence to resource elements mapping for the multiple control resource sets based on the common reference point, wherein the sequence mapping is determined in a cyclic manner between a lower limit point and an upper limit point starting from the common reference point in direction of increasing subcarrier indexes and ending one subcarrier lower than the common reference point; and
- receiving and decoding a physical downlink control channel in a control resource set of the multiple control resource sets based on the determined demodulation reference signal sequence to resource elements mapping.

2. The method of clause 1, wherein the multiple control resource sets comprise the common control resource set for receiving a physical downlink control channel related to obtaining system information carrying cell access related information and at least one other control resource set for receiving other physical downlink control channels.

3. The method of clause 1 or clause 2, wherein at least two of the multiple control resource sets are overlapping at least in part in time and frequency.

4. The method of any one of clauses 1 to 3, wherein the lower limit point and the upper limit point are indicated in the system information carrying cell access related information and/or in radio resource control signaling.

5. The method of any one of clauses 1 to 4, wherein the lower limit point is the lowest subcarrier of a network carrier or the lowest subcarrier of a resource element grid common to the multiple control resource sets, wherein the upper limit point is the highest subcarrier of the actual carrier or another explicitly indicated point of a higher subcarrier than the highest subcarrier of the network carrier.

6. The method of any one of clauses 1 to 5, wherein the sequence mapping $a_{k,l}$ for demodulation reference signal sequence $r_l(m)$ and OFDM symbol $l$ to resource elements $(k, l)$, with $N_{sc}^{RB}$ being the number of subcarriers per resource block, and $\beta_{DMRS}^{PDCCH}$ being an amplitude scaling factor for the demodulation reference signal, is calculated as follows:

for the common control resource set:

$$a_{k,l} = \beta_{DMRS}^{PDCCH} \cdot r_l(3n + k')$$

$$k = (nN_{sc}^{RB} + 4k' + 1)$$

$$k' = 0,1,2$$

$$n = 0,1,...$$

with a reference point for k being the common reference point; and
for the at least one other control resource set:

$$a_{k,l} = \beta_{DMRS}^{PDCCH} \cdot r_l(3n + k')$$

$$k = (nN_{sc}^{RB} + 4k' + 1 + E) \bmod F$$

$$k' = 0,1,2$$

$$n = 0,1,...$$

with a reference point for k being the lower limit point, E being a shift in number of subcarriers between the lower limit point and the common reference point, and F being the cycle length in number of subcarriers.

7. A user equipment, the user equipment being configured for sequence mapping of demodulation reference signals of multiple control resource sets of a serving cell and comprising:

- at least one processor; and
- at least one memory storing instructions that, when executed by the at least one processor, cause the user equipment at least to execute the method according to any one of clauses 1 to 6.

8. A method for sequence mapping of demodulation reference signals of multiple control resource sets of a serving cell, the method being performed by a base station providing the service cell and comprising:

- determining a common reference point for the multiple control resource sets, wherein the common reference point is a lowest subcarrier of a common control resource set;
- determining a demodulation reference signal sequence to resource elements mapping for the multiple control resource sets based on the common reference point, wherein the sequence mapping is determined in a cyclic manner between a lower limit point and an upper limit point starting from the common reference point in direction of increasing subcarrier indexes and ending one subcarrier lower than the common reference point; and
- transmitting a demodulation reference signal of the multiple control resource sets based on the determined demodulation reference signal sequence to resource elements mapping.

9. The method of clause 8, wherein the multiple control resource sets comprise the common control resource set for receiving a physical downlink control channel related to obtaining system information carrying cell access related information and at least one other control resource set for receiving other physical downlink control channels.

10. The method of clause 8 or clause 9, wherein at least two of the multiple control resource sets are overlapping at least in part in time and frequency.

11. The method of any one of clauses 8 to 10, wherein the lower limit point and the upper limit point are indicated to user equipments in the system information carrying cell access related information and/or in radio resource control signaling.

12. The method of any one of clauses 8 to 11, wherein the lower limit point is the lowest subcarrier of a network carrier or the lowest subcarrier of a resource element grid common to the multiple control resource sets, wherein the upper limit point is the highest subcarrier of the network carrier or another explicitly indicated point of a higher subcarrier than the highest subcarrier of the network carrier.

13. The method of any one of clauses 8 to 12, wherein the sequence mapping $a_{k,l}$ for demodulation reference signal sequence $r_l$ (m) and OFDM symbol $l$ to resource elements ($k$, $l$), with $N_{sc}^{RB}$ being the number of subcarriers per resource block, and $\beta_{DMRS}^{PDCCH}$ being an amplitude scaling factor for the demodulation reference signal, is calculated as follows:

for the common control resource set:

$$a_{k,l} = \beta_{DMRS}^{PDCCH} \cdot r_l(3n + k')$$

$$k = (nN_{sc}^{RB} + 4k' + 1)$$

$$k' = 0,1,2$$

$$n = 0,1,\ldots$$

with a reference point for k being the common reference point; and for the at least one other control resource set:

$$a_{k,l} = \beta_{DMRS}^{PDCCH} \cdot r_l(3n + k')$$

$$k = (nN_{sc}^{RB} + 4k' + 1 + E) \bmod F$$

$$k' = 0,1,2$$

$$n = 0,1,\ldots$$

with a reference point for k being the lower limit point, E being a shift in number of subcarriers between the lower limit point and the common reference point, and F being the cycle length in number of subcarriers.

14. A base station, the base station being configured for sequence mapping of demodulation reference signals of multiple control resource sets of a serving cell provided by the base station and comprising:

- at least one processor; and
- at least one memory storing instructions that, when executed by the at least one processor, cause the base station at least to execute the method according to any one of clauses 8 to 13.

15. A computer program product comprising instructions which, when the program is executed by a computer, cause the computer to carry out the method of any one of clauses 1 to 6 or any one of clauses 8 to 13.

**Third set of clauses:**

1. A method for block-wise sequence mapping of a demodulation reference signal of multiple control resource sets of a serving cell, the method being performed by a user equipment and comprising:

- determining a common reference point for the multiple control resource sets, wherein the common reference point is a lowest subcarrier of a common control resource set;
- determining a demodulation reference signal sequence to resource elements mapping for the multiple control resource sets based on the common reference point, wherein the sequence mapping is defined block-wise for blocks of a number of demodulation reference signal sequence elements alternately mapped in direction of increasing and/or decreasing subcarrier indexes; and
- receiving and decoding a physical downlink control channel in a control resource set of the multiple control resource sets based on the determined demodulation reference signal sequence to resource elements mapping.

2. The method of clause 1, wherein the multiple control resource sets comprise the common control resource set for receiving a physical downlink control channel related to obtaining system information carrying cell access related information and at least one other control resource set for receiving other physical downlink control channels.
3. The method of clause 1, wherein at least two of the multiple control resource sets overlap at least in part in time and frequency.

4. The method of clause 1, wherein a block size of the blocks of a number of demodulation reference signal sequence elements is predefined for all network carriers, is defined per frequency band, is defined per frequency range, indicated in a master information block, indicated in other system information, and/or indicated in dedicated radio resource control signaling.

5. The method of clause 1, wherein determining the demodulation reference signal sequence to resource elements mapping comprises:

- mapping a first block starting from the common reference point in direction of increasing subcarrier indexes; and
- mapping a subsequent second block starting from the common reference in direction of decreasing subcarrier indexes.

6. The method of clause 1, wherein the multiple control resource sets share a common scrambling identifier.

7. The method of clause 1 further comprising:

- determining a further demodulation reference signal sequence to resource elements mapping to resource element for physical downlink shared channel reception based on the common reference point; and
- receiving and decoding a physical downlink shared channel based on the determined further demodulation reference signal sequence to resource elements mapping

8. A user equipment, the user equipment being configured for block-wise sequence mapping of a demodulation reference signal of multiple control resource sets of a serving cell and comprising:

   at least one processor; and
   at least one memory storing instructions that, when executed by the at least one processor, cause the user equipment at least to:

   - determine a common reference point for the multiple control resource sets, wherein the common reference point is a lowest subcarrier of a common control resource set;
   - determine a demodulation reference signal sequence to resource elements mapping for the multiple control resource sets based on the common reference point, wherein the sequence mapping is defined block-wise for blocks of a number of demodulation reference signal sequence elements alternately mapped in direction of increasing and/or decreasing subcarrier indexes; and
   - receive and decode a physical downlink control channel in a control resource set of the multiple control resource sets based on the determined demodulation reference signal sequence to resource elements mapping.

9. The user equipment of clause 8, wherein the multiple control resource sets comprise the common control resource set for receiving a physical downlink control channel related to obtaining system information carrying cell access related information and at least one other control resource set for receiving other physical downlink control channels.

10. The user equipment of clause 8, wherein at least two of the multiple control resource sets overlap at least in part in time and frequency.

11. The user equipment of clause 8, wherein a block size of the blocks of a number of demodulation reference signal sequence elements is predefined for all network carriers, is defined per frequency band, is defined per frequency range, indicated in a master information block, indicated in other system information, and/or indicated in dedicated radio resource control signaling.

12. The user equipment of clause 8, wherein, for determining the demodulation reference signal sequence to resource elements mapping, the at least one processor is configured to:

- map a first block starting from the common reference point in direction of increasing subcarrier indexes; and
- map a subsequent second block starting from the common reference in direction of decreasing subcarrier indexes.

13. The user equipment of clause 8, wherein the multiple control resource sets share a common scrambling identifier.

14. The user equipment of clause 8, wherein the at least one processor is further configured to:

- determine a further demodulation reference signal sequence to resource elements mapping to resource element for physical downlink shared channel reception based on the common reference point; and

- receive and decode a physical downlink shared channel based on the further demodulation reference signal sequence to resource elements mapping.

15. A method for block-wise sequence mapping of a demodulation reference signal of multiple control resource sets of a serving cell, the method being performed by a base station providing the service cell and comprising:

- determining a common reference point for the multiple control resource sets, wherein the common reference point is a lowest subcarrier of a common control resource set;
- determining a demodulation reference signal sequence to resource elements mapping for the multiple control resource sets based on the common reference point, wherein the sequence mapping is defined block-wise for blocks of a number of demodulation reference signal sequence elements alternately mapped in direction of increasing and/or decreasing subcarrier indexes; and
- transmitting a demodulation reference signal of the multiple control resource sets based on the determined demodulation reference signal sequence to resource elements mapping.

16. The method of clause 15, wherein the multiple control resource sets comprise the common control resource set for receiving a physical downlink control channel related to obtaining system information carrying cell access related information and at least one other control resource set for receiving other physical downlink control channels.

17. The method of clause 15, wherein at least two of the multiple control resource sets overlap at least in part in time and frequency.

18. The method of clause 15, wherein a block size of the blocks of a number of demodulation reference signal sequence elements is predefined for all network carriers, is defined per frequency band, is defined per frequency range, indicated to user equipments in a master information block, indicated to user equipments in other system information, and/or indicated to user equipments in dedicated radio resource control signaling.

19. The method of clause 15, wherein determining the demodulation reference signal sequence to resource elements mapping further comprises:

- mapping a first block starting from the common reference point in direction of increasing subcarrier indexes; and
- mapping a subsequent second block starting from the common reference in direction of decreasing subcarrier indexes.

20. The method of clause 15, wherein the multiple control resource sets share a common scrambling identifier.

21. The method of clause 15 further comprising:

- determine a further demodulation reference signal sequence to resource elements mapping to resource element for physical downlink shared channel reception based on the common reference point; and
- transmitting a demodulation reference signal associated to physical downlink shared channels base on the further demodulation reference signal sequence to resource elements mapping.

22. A base station, the base station being configured for block-wise sequence mapping of a demodulation reference signal of multiple control resource sets of a serving cell provided by the base station and comprising:

at least one processor; and
at least one memory storing instructions that, when executed by the at least one processor, cause the base station at least to:

- determine a common reference point for the multiple control resource sets, wherein the common reference point is a lowest subcarrier of a common control resource set;
- determine a demodulation reference signal sequence to resource elements mapping for the multiple control resource sets based on the common reference point, wherein the sequence mapping is defined block-wise for blocks of a number of demodulation reference signal sequence elements alternately mapped in direction of increasing and/or decreasing subcarrier indexes; and
- transmit a demodulation reference signal of the multiple control resource sets based on the determined demodulation reference signal sequence to resource elements mapping.

23. The base station of clause 22, wherein the multiple control resource sets comprise the common control resource set for receiving a physical downlink control channel related to obtaining system information carrying cell access related information and at least one other control resource set for receiving other physical downlink control channels.

24. The base station of clause 22, wherein at least two of the multiple control resource sets overlap at least in part in time and frequency.

25. The base station of clause 22, wherein a block size of the blocks of a number of demodulation reference signal sequence elements is predefined for all network carriers, is defined per frequency band, is defined per frequency range, indicated to user equipments in a master information block, indicated to user equipments in other system information, and/or indicated to user equipments in dedicated radio resource control signaling.

26. The base station of clause 22, wherein, for determining the demodulation reference signal sequence to resource elements mapping, the at least one processor is configured to:

- mapping a first block starting from the common reference point in direction of increasing subcarrier indexes; and
- mapping a subsequent second block starting from the common reference in direction of decreasing subcarrier indexes.

27. The base station of clause 22, wherein the multiple control resource sets share a common scrambling identifier.

28. The base station of clause 22, wherein the at least one processor is further configured to:

- determine a further demodulation reference signal sequence to resource elements mapping to resource element for physical downlink shared channel reception based on the common reference point; and
- transmit a demodulation reference signal associated to physical downlink shared channels based on the further demodulation reference signal sequence to resource elements mapping.

**Fourth set of clauses:**

1. A method for receiver processing based on demodulation reference signals of two control resource sets of a serving cell, wherein the two control resource sets comprise a common control resource set for receiving a physical downlink control channel for obtaining system information carrying cell access related information and another control resource set, the method being performed by a user equipment and comprising:

- determining a common reference point for the two control resource sets;
- determining a same scrambling identifier for the two control resource sets;
- determining a demodulation reference signal sequence to resource elements mapping of the two control resource sets based on the common reference point;
- performing receiver processing for physical downlink control channel candidates in the two control resource sets based on an associated demodulation reference signal determined according to the demodulation reference signal sequence to resource elements mapping; and
- receiving and decoding physical downlink control channels according to the receiver processing.

2. The method of clause 1, wherein at least two of the two control resource sets overlap at least in part in time and frequency.

3. The method of clause 1, wherein the receiver processing comprises channel estimation processing.

4. The method of clause 3, wherein performing receiver processing comprises:

- performing a first channel estimation for overlapping resources of the physical downlink control channel candidates of the two control resource sets; and
- performing a second channel estimation for non-overlapping resources of the physical downlink control channel candidates of the two control resource sets.

5. The method of clause 1, wherein the same scrambling identifier is derived from a cell ID of a serving cell and/or derived from radio resource control signaling.

6. The method of clause 1, wherein the common reference point for the two control resource sets is determined based on a lowest subcarrier of the common control resource set and an offset thereto.

7. The method of clause 6, wherein the common reference point ensures that all subcarriers in a common resource grid have a non-negative index.

8. The method of clause 6, wherein the offset is predefined according to a maximum number of subcarriers supported by a network carrier, predefined according to a maximum number of subcarriers in a frequency range or frequency band, or indicated in initial configuration information.

9. The method of clause 1, wherein the common reference point is a lowest subcarrier of the common control resource set.

10. The method of clause 9, wherein the demodulation reference signal sequence to resource elements mapping is determined in a cyclic manner between a lower limit point and an upper limit point starting from the common reference point in direction of increasing subcarrier indexes and ending one subcarrier lower than the common reference point.

11. The method of clause 9, wherein the demodulation reference signal sequence to resource elements mapping is defined block-wise for blocks of a number of demodulation reference signal sequence elements alternately mapped in direction of increasing and/or decreasing subcarrier indexes.

12. A user equipment, the user equipment being configured for receiver processing based on demodulation reference signals of two control resource sets of a serving cell, wherein the two control resource sets comprise a common control resource set for receiving a physical downlink control channel for obtaining system information carrying cell access related information and another control resource set, and comprising:

    at least one processor; and
    at least one memory storing instructions that, when executed by the at least one processor, cause the user equipment at least to:

    - determine a common reference point for the two control resource sets;
    - determine a same scrambling identifier for the two control resource sets;
    - determine a demodulation reference signal sequence to resource elements mapping of the two control resource sets based on the common reference point;
    - perform receiver processing for physical downlink control channel candidates in the two control resource sets based on an associated demodulation reference signal determined according to the demodulation reference signal sequence to resource elements mapping; and
    - receive and decode physical downlink control channels according to the receiver processing.

13. The user equipment of clause 12, wherein at least two of the two control resource sets overlap at least in part in time and frequency.

14. The user equipment of clause 12, wherein the receiver processing comprises channel estimation processing.

15. The user equipment of clause 14, wherein, for performing receiver processing, the at least one processor is configured to:

    - perform a first channel estimation for overlapping resources of the physical downlink control channel candidates of the two control resource sets; and
    - perform a second channel estimation for non-overlapping resources of the physical downlink control channel candidates of the two control resource sets.

16. The user equipment of clause 12, wherein the same scrambling identifier is derived from a cell ID of a serving cell and/or derived from radio resource control signaling.

17. The user equipment of clause 12, wherein the common reference point for the two control resource sets is determined based on a lowest subcarrier of the common control resource set and an offset thereto.

18. The user equipment of clause 17, wherein the common reference point ensures that all subcarriers in a common resource grid have a non-negative index.

19. The user equipment of clause 17, wherein the offset is predefined according to a maximum number of subcarriers supported by a network carrier, predefined according to a maximum number of subcarriers in a frequency range or frequency band, or indicated in initial configuration information.

20. The user equipment of clause 12, wherein the common reference point is a lowest subcarrier of the common control resource set.

21. The user equipment of clause 20, wherein the demodulation reference signal sequence to resource elements mapping is determined in a cyclic manner between a lower limit point and an upper limit point starting from the common reference point in direction of increasing subcarrier indexes and ending one subcarrier lower than the common reference point.

22. The user equipment of clause 20, wherein the demodulation reference signal sequence to resource elements mapping is defined block-wise for blocks of a number of demodulation reference signal sequence elements alternately mapped in direction of increasing and/or decreasing subcarrier indexes.

The foregoing description has provided by way of non-limiting examples a full and informative description of the exemplary embodiment of the subject disclosure. However, various modifications and adaptations may become apparent to those skilled in the relevant arts in view of the foregoing description, when read in conjunction with the accompanying drawings and the appended claims. However, all such and similar modifications of the teachings of this disclosure will still fall within the scope of the subject disclosure as defined in the appended claims. Indeed, there is a further embodiment comprising a combination of one or more embodiments with any of the other embodiments previously discussed.

**Claims**

1.  A method for sequence mapping of demodulation reference signals of multiple control resource sets of a serving cell, the method being performed by a user equipment and comprising:

    - determining a common reference point for the multiple control resource sets, wherein the common reference point is a lowest subcarrier of a common control resource set;
    - determining a demodulation reference signal sequence to resource elements mapping for the multiple control resource sets based on the common reference point, wherein the sequence mapping is determined in a cyclic manner between a lower limit point and an upper limit point starting from the common reference point in direction of increasing subcarrier indexes and ending one subcarrier lower than the common reference point; and
    - receiving and decoding a physical downlink control channel in a control resource set of the multiple control resource sets based on the determined demodulation reference signal sequence to resource elements mapping.

2.  The method of claim 1, wherein the multiple control resource sets comprise the common control resource set for receiving a physical downlink control channel related to obtaining system information carrying cell access related information and at least one other control resource set for receiving other physical downlink control channels.

3.  The method of claim 1 or claim 2, wherein at least two of the multiple control resource sets are overlapping at least in part in time and frequency.

4.  The method of any one of claims 1 to 3, wherein the lower limit point and the upper limit point are indicated in the system information carrying cell access related information and/or in radio resource control signaling.

5.  The method of any one of claims 1 to 4, wherein the lower limit point is the lowest subcarrier of a network carrier or the lowest subcarrier of a resource element grid common to the multiple control resource sets, wherein the upper limit point is the highest subcarrier of the actual carrier or another explicitly indicated point of a higher subcarrier than the highest subcarrier of the network carrier.

6.  The method of any one of claims 1 to 5, wherein the sequence mapping $a_{k,l}$ for demodulation reference signal sequence $r_l(m)$ and OFDM symbol $l$ to resource elements $(k, l)$, with $N_{sc}^{RB}$ being the number of subcarriers per resource block, and $\beta_{DMRS}^{PDCCH}$ being an amplitude scaling factor for the demodulation reference signal, is calculated as follows:

    for the common control resource set:

$$a_{k,l} = \beta_{DMRS}^{PDCCH} \cdot r_l(3n + k')$$

$$k = (n N_{sc}^{RB} + 4k' + 1)$$

$$k' = 0,1,2$$

$$n = 0,1,\dots$$

    with a reference point for k being the common reference point; and
    for the at least one other control resource set:

$$a_{k,l} = \beta_{DMRS}^{PDCCH} \cdot r_l(3n + k')$$

$$k = (nN_{sc}^{RB} + 4k' + 1 + E) \bmod F$$

$$k' = 0,1,2$$

$$n = 0,1,...$$

with a reference point for k being the lower limit point, E being a shift in number of subcarriers between the lower limit point and the common reference point, and F being the cycle length in number of subcarriers.

7. A user equipment, the user equipment being configured for sequence mapping of demodulation reference signals of multiple control resource sets of a serving cell and comprising:

   at least one processor; and
   at least one memory storing instructions that, when executed by the at least one processor, cause the user equipment at least to execute the method according to any one of claims 1 to 6.

8. A method for sequence mapping of demodulation reference signals of multiple control resource sets of a serving cell, the method being performed by a base station providing the service cell and comprising:

   - determining a common reference point for the multiple control resource sets, wherein the common reference point is a lowest subcarrier of a common control resource set;
   - determining a demodulation reference signal sequence to resource elements mapping for the multiple control resource sets based on the common reference point, wherein the sequence mapping is determined in a cyclic manner between a lower limit point and an upper limit point starting from the common reference point in direction of increasing subcarrier indexes and ending one subcarrier lower than the common reference point; and
   - transmitting a demodulation reference signal of the multiple control resource sets based on the determined demodulation reference signal sequence to resource elements mapping.

9. The method of claim 8, wherein the multiple control resource sets comprise the common control resource set for receiving a physical downlink control channel related to obtaining system information carrying cell access related information and at least one other control resource set for receiving other physical downlink control channels.

10. The method of claim 8 or claim 9, wherein at least two of the multiple control resource sets are overlapping at least in part in time and frequency.

11. The method of any one of claims 8 to 10, wherein the lower limit point and the upper limit point are indicated to user equipments in the system information carrying cell access related information and/or in radio resource control signaling.

12. The method of any one of claims 8 to 11, wherein the lower limit point is the lowest subcarrier of a network carrier or the lowest subcarrier of a resource element grid common to the multiple control resource sets, wherein the upper limit point is the highest subcarrier of the network carrier or another explicitly indicated point of a higher subcarrier than the highest subcarrier of the network carrier.

13. The method of any one of claims 8 to 12, wherein the sequence mapping $a_{k,l}$ for demodulation reference signal sequence $r_l(m)$ and OFDM symbol $l$ to resource elements $(k, l)$, with $N_{sc}^{RB}$ being the number of subcarriers per resource block, and $\beta_{DMRS}^{PDCCH}$ being an amplitude scaling factor for the demodulation reference signal, is calculated as follows:

   for the common control resource set:

$$a_{k,l} = \beta_{DMRS}^{PDCCH} \cdot r_l(3n + k')$$

$$k = (nN_{sc}^{RB} + 4k' + 1)$$

$$k' = 0,1,2$$

$$n = 0,1,\ldots$$

with a reference point for k being the common reference point; and
for the at least one other control resource set:

$$a_{k,l} = \beta_{DMRS}^{PDCCH} \cdot r_l(3n + k')$$

$$k = (nN_{sc}^{RB} + 4k' + 1 + E) \bmod F$$

$$k' = 0,1,2$$

$$n = 0,1,\ldots$$

with a reference point for k being the lower limit point, E being a shift in number of subcarriers between the lower limit point and the common reference point, and F being the cycle length in number of subcarriers.

14. A base station, the base station being configured for sequence mapping of demodulation reference signals of multiple control resource sets of a serving cell provided by the base station and comprising:

   at least one processor; and
   at least one memory storing instructions that, when executed by the at least one processor, cause the base station at least to execute the method according to any one of claims 8 to 13.

15. A computer program product comprising instructions which, when the program is executed by a computer, cause the computer to carry out the method of any one of claims 1 to 6 or any one of claims 8 to 13.

Fig. 1

**Fig. 2**

**Fig. 3**

**Fig. 4A**

**Fig. 4B**

502       501

44    51       42

41

...

43

40

45

**Fig. 5A**

48-A    48-B    43

45

48-C    43

45

**Fig. 5B**

**Fig. 6**

**Fig. 7**

EP 4 746 329 A1

501

51      44

40

43

45

**Fig. 8**

907

906

904

402

902      903

91

41

51

92

44

40

43

93

901

905

**Fig. 9**

Fig. 10A

Fig. 10B

EP 4 746 329 A1

**Fig. 11**

Europäisches
Patentamt
European
Patent Office
Office européen
des brevets

## EUROPEAN SEARCH REPORT

**Application Number**

EP 24 21 3059

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | LG ELECTRONICS: "Remaining details on PDCCH structure", 3GPP DRAFT; R1-1719917, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20171127 - 20171201 18 November 2017 (2017-11-18), XP051369630, Retrieved from the Internet: URL:http://www.3gpp.org/ftp/tsg%5Fran/WG1%5FRL1/TSGR1%5F91/Docs/ [retrieved on 2017-11-18] | 1-5, 7-12,14, 15 | INV. H04L5/00 |
| A | * Page1, Section 2.1 Page 3, Page 3, Section 2.2 * | 6,13 | |
| Y | CN 113 259 072 B (DATANG MOBILE COMMUNICATIONS EQUIPMENT CO LTD) 29 July 2022 (2022-07-29) * paragraphs [0142] - [0144], [0221]; figure 1b * | 1-5, 7-12,14, 15 | TECHNICAL FIELDS SEARCHED (IPC) H04L |

The present search report has been drawn up for all claims

| Place of search | Date of completion of the search | Examiner |
|---|---|---|
| The Hague | 20 April 2025 | Kulin, Merima |

EPO FORM 1503 03.82 (P04C01)

## ANNEX TO THE EUROPEAN SEARCH REPORT
## ON EUROPEAN PATENT APPLICATION NO.

EP 24 21 3059

This annex lists the patent family members relating to the patent documents cited in the above-mentioned European search report.
The members are as contained in the European Patent Office EDP file on
The European Patent Office is in no way liable for these particulars which are merely given for the purpose of information.

20-04-2025

| Patent document cited in search report | Publication date | Patent family member(s) | Publication date |
|---|---|---|---|
| CN 113259072 B | 29-07-2022 | NONE | |

EPO FORM P0459

For more details about this annex : see Official Journal of the European Patent Office, No. 12/82